(19) **Europäisches Patentamt / European Patent Office / Office européen des brevets**

(11) **EP 4 340 504 A1**

(12) **EUROPEAN PATENT APPLICATION**
published in accordance with Art. 153(4) EPC

(43) Date of publication:
**20.03.2024 Bulletin 2024/12**

(21) Application number: **22819430.4**

(22) Date of filing: **01.06.2022**

(51) International Patent Classification (IPC):
**H04W 72/04** (2023.01)     **H04W 92/10** (2009.01)

(52) Cooperative Patent Classification (CPC):
**H04W 8/24; H04W 72/04; H04W 72/12; H04W 92/10**

(86) International application number:
**PCT/CN2022/096629**

(87) International publication number:
**WO 2022/257832 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2021 CN 202110639352**

(71) Applicant: **Huawei Technologies Co., Ltd.**
**Longgang**
**Shenzhen, Guangdong 518129 (CN)**

(72) Inventors:
• **DING, Mengying**
  **Shenzhen, Guangdong 518129 (CN)**
• **PENG, Jinlin**
  **Shenzhen, Guangdong 518129 (CN)**
• **ZHOU, Guohua**
  **Shenzhen, Guangdong 518129 (CN)**

(74) Representative: **Maiwald GmbH**
**Engineering**
**Elisenhof**
**Elisenstrasse 3**
**80335 München (DE)**

(54) **DATA TRANSMISSION METHOD AND APPARATUS**

(57)    This application provides a data transmission method and apparatus. The data transmission method includes: determining a maximum communications data amount of a terminal device in a first time period, where the first time period is a transmission period of a periodic service, and the maximum communications data amount in the first time period is less than a maximum communications data amount of continuous communication in the first time period; and sending the maximum communications data amount of the terminal device in the first time period. For a feature of an AR or VR terminal service in a time-frequency domain, a terminal type in which a baseband capability is decoupled from a hardware capability is defined, and a communications and transmission method for this terminal type is proposed, so that costs of the terminal device are effectively reduced, and wireless communication of the AR or VR service is further optimized.

400

```
Terminal device                                    Network device
      |                                                  |
┌─────────────────────────┐                              |
│ S410: Determine a first │                              |
│ maximum data amount of  │                              |
│ communication performed │                              |
│ by a terminal device in │                              |
│ a first time period     │                              |
└─────────────────────────┘                              |
      |                                                   |
      |  S420: Send first information, where the          |
      |  first information indicates the first            |
      |  maximum data amount                              |
      |────────────────────────────────────────────────→ |
      |                          ┌────────────────────────────────────┐
      |                          │ S430: Perform resource scheduling  │
      |                          │ on the terminal device based on    │
      |                          │ the first information              │
      |                          └────────────────────────────────────┘
```

FIG. 4

**Description**

This application claims priority to Chinese Patent Application No. 202110639352.1, filed with the China National Intellectual Property Administration on June 8, 2021 and entitled "DATA TRANSMISSION METHOD AND APPARATUS", which is incorporated herein by reference in its entirety.

**TECHNICAL FIELD**

This application relates to the communications field, and more specifically, to a data transmission method and apparatus.

**BACKGROUND**

With increasing communication requirements, augmented reality (augmented reality, AR) and virtual reality (virtual reality, VR) services develop rapidly, for example, VR cloud gaming (VR cloud gaming), VR or AR conference, AR gaming, and AR education. Compared with an enhanced mobile broadband (enhanced mobile broadband, eMBB) service, transmission of most AR or VR services is periodic, and has a relatively high requirement on a transmission rate and a delay.

For a terminal device that supports an AR or VR service, if a hardware capability of the terminal device meets a maximum uplink and downlink transmission rate requirement of the AR or VR service, a baseband capability of the terminal device is redundant. Therefore, how to reduce costs of the terminal device that supports the AR or VR service and optimize wireless communication of the AR or VR service is an urgent problem to be resolved.

**SUMMARY**

This application provides a data transmission method and apparatus, to reduce costs of a terminal device, and effectively optimize wireless communication of an AR or VR service.

According to a first aspect, a data transmission method is provided. The method may be performed by a terminal device, or may be performed by a chip or a circuit used for the terminal device. This is not limited in this application. For ease of description, the following uses an example in which the method is performed by the terminal device for description.

The method includes: determining a first maximum data amount of communication performed by a terminal device in a first time period, where the first time period is a transmission period of data of the terminal device, and the first maximum data amount of communication performed in the first time period is less than a second maximum data amount of continuous communication performed in the first time period; and sending first information, where the first information indicates the first maximum data amount.

It should be understood that, for a terminal device of an AR or VR service, service data of the terminal device arrives periodically, that is, when a data packet arrives, another data packet arrives after the first time period. For example, a value of the first time period is an absolute time value, or a quantity of slots, a quantity of frames, or a quantity of symbols corresponding to a subcarrier. Herein, the first time period may be understood as an arrival period of a data packet in a periodic service, for example, 16 milliseconds (ms).

For example, the data packet may be an application layer data packet.

A total quantity of bits that can be transmitted by the terminal device in the first time period is less than a maximum total quantity of bits that can be transmitted by the terminal device in the first time period. When the terminal device performs continuous transmission in the first time period, and the terminal device performs transmission based on a maximum uplink transmission rate of the terminal device and/or a maximum downlink transmission rate of the terminal device in each unit transmission time, a total quantity of bits transmitted by the terminal device in the first time period is a maximum total quantity of bits of the terminal device in the first time period.

The maximum uplink and downlink transmission rate herein includes a maximum uplink transmission rate and a maximum downlink transmission rate. For an uplink or downlink frequency band combination, a maximum uplink or downlink transmission rate that can be supported by a user is as follows:

$$\text{DataRate (in Mbps)} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left( 1 - OH^{(j)} \right) \right) \quad (1)$$

It should be noted that "can be communicated", "can be transmitted", or "can be processed" may be equivalent. This is not specifically limited in this application.

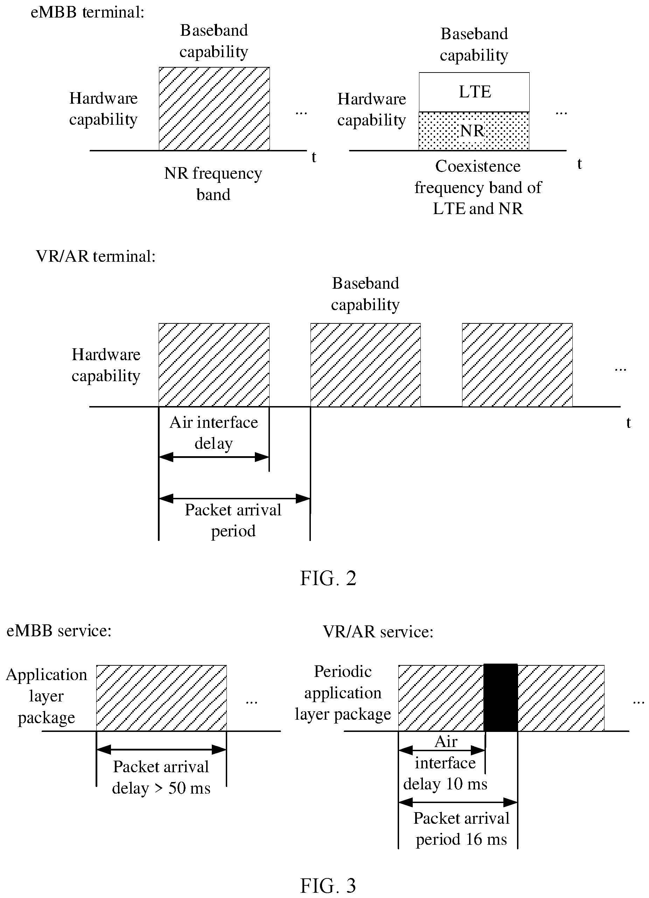

It should be noted that transmission may be receiving and/or sending of data, or may be sending and/or receiving data. The first maximum data amount of communication performed by the terminal device in the first time period may be understood as a total quantity of bits of uplink and/or downlink communications data that can be processed by the terminal device within 10 ms. The second maximum data amount of the continuous communication performed by the terminal device in the first time period may be understood as that the terminal device transmits data continuously to the network device in a 16-ms communications process. As shown in FIG. 3, for the AR or VR service, the first maximum data amount may be understood as a communications data amount of the terminal device within 10 ms, that is, an area corresponding to a shadow part, indicating that a duty cycle of transmitting a data packet by the terminal device within a period of 16 ms is less than 1; and the second maximum data amount may be understood as a data amount of continuous communication of the terminal device within 16 ms, that is, an area corresponding to a shadow part and a white part, indicating that a duty cycle of transmitting a data packet by the terminal device within the period of 16 ms is equal to 1.

In this embodiment of this application, the first maximum data amount may be directly determined based on a data packet size, or may be further determined based on a hardware capability and a service feature of the terminal.

According to the solution provided in this application, the first maximum data amount of communication performed by the terminal device in the first time period is reported, where the first maximum data amount may be understood as a size of a data packet transmitted by the terminal device in the first time period, so that a baseband capability of the terminal device is considered during resource scheduling, thereby effectively reducing costs of the terminal device and optimizing communication of the AR or VR service.

With reference to the first aspect, in some implementations of the first aspect, the first maximum data amount in the first time period may include an uplink and downlink layer 2 buffer size.

It should be understood that one of baseband storage capabilities of the terminal device is the uplink and downlink layer 2 buffer size. The uplink and downlink layer 2 buffer size herein may be understood as a total quantity of bits or bytes that can be stored, by the terminal device, in a radio link management layer (radio link control, RLC) send window, an RLC receiving and reassembly window, and a packet data convergence protocol (packet data convergence protocol, PDCP) reordering window for all radio bearers.

With reference to the first aspect, in some implementations of the first aspect, the first information includes one or more of the following pieces of information: image definition, a source encoding method, a source compression ratio, and a first index, and the first index corresponds to the first maximum data amount.

It should be understood that, in this implementation, the terminal device implicitly indicates the first maximum data amount of the terminal device in the first time period.

The downlink is used as an example, and the terminal device reports downlink video definition (for example, 4K, 8K, or 32K), a source encoding method (for example, H264 or H265), and a source compression ratio (for example, 30% or 60%). A correspondence among the video definition, the source encoding method, and the source compression ratio may be predefined by using a protocol. For example, the video definition 4K, the source encoding method H264, and the source compression ratio 30% correspond to each other, and indicate that the first maximum data amount of communication performed by the terminal device in the first time period is 100 bits (bits). For another example, the video definition 8K, the source encoding method H264, and the source compression ratio 60% correspond to each other, and indicate that the first maximum data amount of communication performed by the terminal device in the first time period is 200 bits.

For example, the terminal device reports a first index value "1" to the network device, and the first index value "1" corresponds to a data packet of 100 bits. In other words, the index value "1" indicates that the first maximum data amount of communication performed by the terminal device in the first time period is 100 bits.

With reference to the first aspect, in some implementations of the first aspect, the first information further includes one or more of the following pieces of information: the first time period, an air interface transmission delay of a data packet, a duty cycle of data packet transmission, a core network delay of a data packet, and a local rendering delay, where the air interface transmission delay of a data packet is less than the first time period.

It should be understood that this implementation may be understood as that the terminal device directly or indirectly reports a time used by the terminal device to process the first maximum data amount in the first time period, for example, 10 ms.

For example, the terminal device directly reports the air interface transmission delay of a data packet. Alternatively, the terminal device combines and reports a plurality of pieces of information in the first information. For example, the air interface transmission delay of a data packet may be determined based on the first time period and the duty cycle of data packet transmission; or the air interface transmission delay of a data packet may also be determined based on the first time period, the core network delay of a data packet, and the local rendering delay.

It should be understood that a value of the air interface transmission delay may be an absolute time value, or a quantity of slots, a quantity of frames, or a quantity of symbols corresponding to a subcarrier, for example, 10 ms.

With reference to the first aspect, in some implementations of the first aspect, second information is sent, where the second information is used to determine a maximum uplink transmission rate and/or a maximum downlink transmission rate of the terminal device, and the second information includes one or more of the following pieces of information: bandwidth, a subcarrier spacing or slot duration, a maximum modulation order, a maximum transmission code rate, a maximum quantity of transmission layers, and a scale factor of each carrier in a carrier combination.

For example, the second information may include hardware capability information of the terminal device.

In this embodiment of this application, the hardware processing capability may be understood as the maximum uplink transmission rate and/or the maximum downlink transmission rate of the terminal device. It should be understood that, for an AR or VR service capability, to ensure decoupling between a hardware capability and a baseband capability, the hardware capability of the terminal device may remain unchanged.

With reference to the first aspect, in some implementations of the first aspect, the determining a first maximum data amount of communication performed by a terminal device in a first time period includes: determining the first maximum data amount based on a data packet size.

With reference to the first aspect, in some implementations of the first aspect, the determining a first maximum data amount of communication performed by a terminal device in a first time period includes: determining the first maximum data amount based on the air interface transmission delay of a data packet and the maximum uplink transmission rate and/or the maximum downlink transmission rate of the terminal device.

The air interface transmission delay of a data packet may be determined by using a data packet arrival period, a duty cycle of data packet transmission or a core network delay of a data packet, and a local rendering delay.

In addition, the second maximum data amount of continuous communication performed in the first time period is determined based on the first time period and the maximum uplink transmission rate and/or the maximum downlink transmission rate of the terminal device.

With reference to the first aspect, in some implementations of the first aspect, the first time period includes N time units, including: receiving scheduling information, where the scheduling information is used to schedule a physical uplink shared channel PUSCH and/or a physical downlink shared channel PDSCH, and includes a total quantity $TotalData_{UL}$ of bits that the network device schedules the terminal device to send on the PUSCH and/or a total quantity $TotalData_{DL}$ of bits that the network device schedules the terminal device to transmit on the PDSCH from a time unit (N - K) to a current scheduling time unit K; and when $TotalData_{UL} + TotalData_{DL} < F_{total}$, sending the PUSCH and/or receiving the PDSCH, where $F_{total}$ is a second maximum data amount, and N, K and N - K are positive integers greater than or equal to 0.

In other words, if a total quantity of bits of the uplink data and/or the downlink data scheduled by the network device is greater than the first maximum data amount used by the terminal device in the transmission period of the periodic service, the terminal device may not process corresponding scheduling information.

For example, the slot may be a type of time unit, for example, ms.

According to a second aspect, a data transmission method is provided. The method may be performed by a network device, or may be performed by a chip or a circuit used for the network device. This is not limited in this application. For ease of description, the following uses an example in which the method is performed by the network device for description.

The method includes: receiving first information, where the first information indicates a first maximum data amount of communication performed by a terminal device in a first time period, the first time period is a transmission period of data of the terminal device, and the first maximum data amount in the first time period is less than a second maximum data amount of continuous communication performed in the first time period; and performing resource scheduling on the terminal device based on the first information.

According to the solution provided in this application, the first maximum data amount of the terminal device in the first time period is received, where the first maximum data amount may be understood as a size of a data packet transmitted by the terminal device in the first time period, so that a baseband capability of the terminal device is considered during resource scheduling, thereby effectively reducing costs of the terminal device and optimizing communication of the AR or VR service.

With reference to the second aspect, in some implementations of the second aspect, the first maximum data amount in the first time period includes an uplink and downlink layer 2 buffer size.

With reference to the second aspect, in some implementations of the second aspect, the first information includes one or more of the following pieces of information: image definition, a source encoding method, a source compression ratio, and a first index, and the first index corresponds to the first maximum data amount.

With reference to the second aspect, in some implementations of the second aspect, the second information further includes one or more of the following pieces of information: the first time period, an air interface transmission delay of a data packet, a duty cycle of data packet transmission, a core network delay of a data packet, and a local rendering delay, where the air interface transmission delay of a data packet is less than the first time period.

With reference to the second aspect, in some implementations of the second aspect, second information is received, where the second information is used to determine a maximum uplink transmission rate and/or a maximum downlink transmission rate of the terminal device, and the second information includes one or more of the following pieces of information: bandwidth, a subcarrier spacing or slot duration, a maximum modulation order, a maximum transmission code rate, a maximum quantity of transmission layers, and a scale factor of each carrier in a carrier combination; the maximum uplink and downlink transmission rate of the terminal device is determined based on the second information; and a maximum data amount of transmission performed by the terminal device in the first time period is determined based on the maximum uplink and downlink transmission rate of the terminal device and the first information.

With reference to the second aspect, in some implementations of the second aspect, the first time period includes N time units, including: sending scheduling information, where the scheduling information is used to schedule a physical uplink shared channel PUSCH and/or a physical downlink shared channel PDSCH of the terminal device, and includes a total quantity $TotalData_{UL}$ of bits that the network device schedules the terminal device to send on the PUSCH and/or a total quantity $TotalData_{DL}$ of bits that the network device schedules the terminal device to transmit on the PDSCH from a time unit (N - K) to a current scheduling time unit K, where $TotalData_{UL} + TotalData_{DL} < F_{total}$, $F_{total}$ is a second maximum data amount, and N, K and N - K are positive integers greater than or equal to 0.

With reference to the first aspect or the second aspect, in some implementations, a manner of carrying the first information and the second information in this application may be but is not limited to one or a combination of two of radio resource control signaling and media access control (media access control, MAC) layer signaling. The radio resource control signaling includes radio resource control (radio resource control, RRC) signaling; the MAC layer signaling includes MAC control element (MAC control element, MAC CE) signaling; and the scheduling information may be carried in physical layer (physical, PHY) signaling, and the physical layer signaling includes downlink control information (downlink control information, DCI) signaling and the like.

According to a third aspect, a data transmission apparatus is provided, including: a processing unit, configured to determine a maximum data amount of communication performed by a terminal device in a first time period, where the first time period is a transmission period of data of the terminal device, and the first maximum data amount of communication performed in the first time period is less than a second maximum data amount of continuous communication performed in the first time period; and a transceiver unit, configured to send first information, where the first information indicates the first maximum data amount.

It should be understood that, for a terminal device of an AR or VR service, service data of the terminal device arrives periodically, that is, when a data packet arrives, another data packet arrives after the first time period. For example, a value of the first time period is an absolute time value, or a quantity of slots, a quantity of frames, or a quantity of symbols corresponding to a subcarrier. Herein, the first time period may be understood as an arrival period of a data packet in a periodic service, for example, 16 ms.

A total quantity of bits that can be transmitted by the terminal device in the first time period is less than a maximum total quantity of bits that can be transmitted by the terminal device in the first time period. When the terminal device performs continuous transmission in the first time period, and the terminal device performs transmission based on a maximum uplink transmission rate of the terminal device and/or a maximum downlink transmission rate of the terminal device in each unit transmission time, a total quantity of bits transmitted by the terminal device in the first time period is a maximum total quantity of bits of the terminal device in the first time period.

The maximum uplink and downlink transmission rate herein includes a maximum uplink transmission rate and a maximum downlink transmission rate. For an uplink or downlink frequency band combination, a maximum uplink or downlink transmission rate that can be supported by a user is as follows:

$$\text{DataRate (in Mbps)} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right)$$

It should be noted that "can be communicated", "can be transmitted", or "can be processed" may be equivalent. This is not specifically limited in this application.

It should be noted that transmission may be receiving and/or sending of data, or may be sending and/or receiving data. The first maximum data amount of communication performed by the terminal device in the first time period may be understood as a total quantity of bits of uplink and/or downlink communications data that can be processed by the terminal device within 10 ms. The second maximum data amount of the continuous communication performed by the terminal device in the first time period may be understood as that the terminal device transmits data continuously to the network device in a 16-ms communications process. As shown in FIG. 3, for the AR or VR service, the first maximum data amount may be understood as a communications data amount of the terminal device within 10 ms, that is, an area corresponding to a shadow part; and the second maximum data amount may be understood as a data amount of continuous communication of the terminal device within 16 ms, that is, an area corresponding to a shadow part and a white part.

In this embodiment of this application, the first maximum data amount may be directly determined based on a data packet size, or may be further determined based on a hardware capability and a service feature of the terminal.

With reference to the third aspect, in some implementations of the third aspect, the first maximum data amount in the first time period includes an uplink and downlink layer 2 buffer size.

It should be understood that one of baseband storage capabilities of the terminal device is the uplink and downlink layer 2 buffer size. The uplink and downlink layer 2 buffer size herein may be understood as a total quantity of bits or bytes that can be stored, by the terminal device, in a radio link management layer (radio link control, RLC) send window, an RLC receiving and reassembly window, and a packet data convergence protocol (packet data convergence protocol, PDCP) reordering window for all radio bearers.

With reference to the third aspect, in some implementations of the third aspect, the first information includes one or more of the following pieces of information: image definition, a source encoding apparatus, a source compression ratio, and a first index, and the first index corresponds to the first maximum data amount.

It should be understood that, in this implementation, the terminal device implicitly indicates the first maximum data amount of the terminal device in the first time period.

The downlink is used as an example, and the terminal device reports downlink video definition (for example, 4K, 8K, or 32K), a source encoding method (for example, H264 or H265), and a source compression ratio (for example, 30% or 60%). A correspondence among the video definition, the source encoding method, and the source compression ratio may be predefined by using a protocol. For example, the video definition 4K, the source encoding method H264, and the source compression ratio 30% correspond to each other, and indicate that the first maximum data amount of communication performed by the terminal device in the first time period is 100 bits. For another example, the video definition 8K, the source encoding method H264, and the source compression ratio 60% correspond to each other, and indicate that the first maximum data amount of communication performed by the terminal device in the first time period is 200 bits.

For example, the terminal device reports a first index value "1" to the network device, and the first index value "1" corresponds to a data packet of 100 bits. In other words, the index value "1" indicates that the first maximum data amount of communication performed by the terminal device in the first time period is 100 bits.

With reference to the third aspect, in some implementations of the third aspect, the first information further includes one or more of the following pieces of information: the first time period, an air interface transmission delay of a data packet, a duty cycle of data packet transmission, a core network delay of a data packet, and a local rendering delay, where the air interface transmission delay of a data packet is less than the first time period.

It should be understood that this implementation may be understood as that the terminal device directly or indirectly reports a time used by the terminal device to process the first maximum data amount in the first time period, for example, 10 ms.

For example, the terminal device directly reports the air interface transmission delay of a data packet; or combines a plurality of pieces of information in the first information. For example, the air interface transmission delay of a data packet may be determined based on the first time period and the duty cycle of data packet transmission; or the air interface transmission delay of a data packet may also be determined based on the first time period, the core network delay of a data packet, and the local rendering delay.

It should be understood that a value of the air interface transmission delay may be an absolute time value, or a quantity of slots, a quantity of frames, or a quantity of symbols corresponding to a subcarrier, for example, 10 ms.

With reference to the third aspect, in some implementations of the third aspect, the transceiver unit is further configured to send second information, where the second information is used to determine a maximum uplink transmission rate and/or a maximum downlink transmission rate of the terminal device, and the second information includes one or more of the following pieces of information: bandwidth, a subcarrier spacing or slot duration, a maximum modulation order, a maximum transmission code rate, a maximum quantity of transmission layers, and a scale factor of each carrier in a carrier combination.

For example, the second information may include hardware capability information of the terminal device.

In this embodiment of this application, the hardware processing capability may be understood as the maximum uplink transmission rate and/or the maximum downlink transmission rate of the terminal device. It should be understood that, for an AR or VR service capability, to ensure decoupling between a hardware capability and a baseband capability, the hardware capability of the terminal device may remain unchanged.

With reference to the third aspect, in some implementations of the third aspect, the processing unit is further configured to determine the first maximum data amount based on a data packet size.

With reference to the third aspect, in some implementations of the third aspect, the processing unit is further configured to determine the first maximum data amount based on the air interface transmission delay of a data packet and the maximum uplink and downlink transmission rate of the terminal device.

The air interface transmission delay of a data packet may be determined by using a data packet arrival period, a duty cycle of data packet transmission or a core network delay of a data packet, and a local rendering delay.

In addition, the second maximum data amount of continuous communication performed in the first time period is determined based on the first time period and the maximum uplink transmission rate and/or the maximum downlink transmission rate of the terminal device.

With reference to the third aspect, in some implementations of the third aspect, the first time period includes N time units, and the transceiver unit is further configured to: receive scheduling information, where the scheduling information is used to schedule a physical uplink shared channel PUSCH and/or a physical downlink shared channel PDSCH, and includes a total quantity $TotalData_{UL}$ of bits that a network device schedules the terminal device to send on the PUSCH, and/or a total quantity $TotalData_{DL}$ of bits that a network device schedules the terminal device to send on the PDSCH from a time unit (N - K) to a current scheduling time unit K; and

when $TotalData_{UL} + TotalData_{DL} < F_{total}$, send the PUSCH, and/or receive the PDSCH, where $F_{total}$ is the second maximum data amount, and N, K, and N - K are positive integers greater than or equal to 0.

In other words, if a total quantity of bits of the uplink data and/or the downlink data scheduled by the network device is greater than the first maximum data amount used by the terminal device in the transmission period of the periodic service, the terminal device may not process corresponding scheduling information.

According to a fourth aspect, a data transmission apparatus is provided, including: a transceiver unit, configured to receive first information, where the first information indicates a first maximum data amount of communication performed by a terminal device in a first time period, the first time period is a transmission period of data of the terminal device, and the first maximum data amount in the first time period is less than a second maximum data amount of continuous communication performed in the first time period; and a processing unit, configured to perform resource scheduling on the terminal device based on the first information.

With reference to the fourth aspect, in some implementations of the fourth aspect, the first maximum data amount in the first time period includes an uplink and downlink layer 2 buffer size.

With reference to the fourth aspect, in some implementations of the fourth aspect, the first information includes one or more of the following pieces of information: image definition, a source encoding apparatus, a source compression ratio, and a first index, and the first index corresponds to the first maximum data amount.

With reference to the fourth aspect, in some implementations of the fourth aspect, the first information further includes one or more of the following pieces of information: the first time period, an air interface transmission delay of a data packet, a duty cycle of data packet transmission, a core network delay of a data packet, and a local rendering delay, where the air interface transmission delay of a data packet is less than the first time period.

With reference to the fourth aspect, in some implementations of the fourth aspect, the transceiver unit is further configured to receive second information, for example, hardware capability information of the terminal device, where the second information is used to determine a maximum uplink and downlink transmission rate of the terminal device, and the second information includes one or more of the following pieces of information: bandwidth, a subcarrier spacing or slot duration, a maximum modulation order, a maximum transmission code rate, a maximum quantity of transmission layers, and a scale factor of each carrier in a carrier combination; the processing unit is further configured to determine the maximum uplink and downlink transmission rate of the terminal device based on the second information; and the processing unit is further configured to determine, based on the maximum uplink and downlink transmission rate of the terminal device and the first information, the first maximum data amount of communication performed by the terminal device in the first time period.

With reference to the fourth aspect, in some implementations of the fourth aspect, the transceiver unit is further configured to send scheduling information, where the scheduling information is used to schedule a physical uplink shared channel PUSCH and/or a physical downlink shared channel PDSCH, and includes a total quantity $TotalData_{UL}$ of bits that the network device schedules the terminal device to send on the PUSCH and/or a total quantity $TotalData_{DL}$ of bits that the network device schedules the terminal device to transmit on the PDSCH from a time unit (N - K) to a current scheduling time unit K, where $TotalData_{UL} + TotalData_{DL} < F_{total}$, $F_{total}$ is a second maximum data amount, and N, K and N - K are positive integers greater than or equal to 0.

With reference to the third aspect or the fourth aspect, in some implementations, a manner of carrying the first information and the scheduling information in this application may be but is not limited to one or a combination of at least two of radio resource control signaling, media access control MAC layer signaling, and physical layer PHY signaling. The radio resource control signaling includes RRC signaling; the MAC layer signaling includes MAC CE signaling; the physical layer signaling includes DCI signaling; and the like.

According to a fifth aspect, a terminal device is provided, including a processor. Optionally, the terminal device further includes a memory. The processor is configured to control a transceiver to receive and send a signal. The memory is configured to store a computer program. The processor is configured to invoke the computer program from the memory and run the computer program, so that a first node and/or the terminal device perform/performs the method in any one of the first aspect or the possible implementations of the first aspect.

Optionally, there are one or more processors, and there are one or more memories.

Optionally, the memory may be integrated with the processor, or the memory and the processor are separately disposed.

Optionally, the terminal device further includes a transceiver, and the transceiver may be specifically a transmitter machine (transmitter) and a receiver machine (receiver).

According to a sixth aspect, a network device is provided, including a processor, and optionally, further including a memory. The processor is configured to control a transceiver to receive and send a signal. The memory is configured to store a computer program. The processor is configured to invoke the computer program from the memory and run the computer program, so that the network device performs the method in any one of the second aspect or the possible implementations of the second aspect.

Optionally, there are one or more processors, and there are one or more memories.

Optionally, the memory may be integrated with the processor, or the memory and the processor are separately disposed.

Optionally, the network device further includes a transceiver, and the transceiver may be specifically a transmitter machine (transmitter) and a receiver machine (receiver).

According to a seventh aspect, a communications apparatus is provided, including modules or units configured to implement the method in any one of the first aspect or the possible implementations of the first aspect, or modules or units configured to implement the method in any one of the second aspect or the possible implementations of the second aspect.

According to an eighth aspect, a communications system is provided, including: a terminal device, configured to perform the method in any one of the first aspect or the possible implementations of the first aspect; and a network device, configured to perform the method in any one of the second aspect or the possible implementations of the second aspect.

According to a ninth aspect, a computer-readable storage medium is provided. The computer-readable storage medium stores a computer program or code. When the computer program or code runs on a computer, the computer is enabled to perform the method in any one of the first aspect or the possible implementations of the first aspect, or the method in any one of the second aspect or the possible implementations of the second aspect.

According to a tenth aspect, a chip is provided, including at least one processor, where the at least one processor is coupled to a memory, the memory is configured to store a computer program, and the processor is configured to invoke the computer program from the memory and run the computer program, so that a terminal device in which the chip system is installed performs the method in any one of the first aspect or the possible implementations of the first aspect, and a network device in which the chip system is installed performs the method in any one of the second aspect or the possible implementations of the second aspect.

The chip may include an input circuit or interface configured to send information or data, and an output circuit or interface configured to receive information or data.

According to an eleventh aspect, a computer program product is provided. The computer program product includes computer program code. When the computer program code is run by a network device, a first node and/or a terminal device perform/performs the method in any one of the first aspect or the possible implementations of the first aspect, and the network device performs the method in any one of the second aspect or the possible implementations of the second aspect.

According to the solutions in the embodiments of this application, for a feature of an AR or VR terminal service in a time-frequency domain, a terminal device type in which a baseband capability is decoupled from a hardware processing capability is proposed, and a communications and transmission method for this terminal device type is proposed, so that costs of the terminal device are effectively reduced, and wireless communication of the AR or VR service is further optimized.

## BRIEF DESCRIPTION OF DRAWINGS

FIG. 1 is a schematic diagram of an example of a communications system applicable to this application;

FIG. 2 is a schematic diagram of an example in which a hardware capability and a baseband capability of a terminal device of an eMBB service and an XR service are decoupled;

FIG. 3 is a schematic diagram of an example of data packet transmission of an eMBB service and an XR service;

FIG. 4 is a schematic diagram of an example of a data transmission method applicable to this application;

FIG. 5 is a schematic diagram of an example of a baseband computing capability and/or a storage capability of a terminal device applicable to this application;

FIG. 6 is a schematic diagram of another example of a baseband computing capability and/or a storage capability of a terminal device applicable to this application;

FIG. 7 is a schematic diagram of another example of a data transmission method applicable to this application;
FIG. 8 is a schematic diagram of an example of a service feature of a terminal device applicable to this application;
FIG. 9 is a schematic diagram of another example of a data transmission method applicable to this application;
FIG. 10 is a schematic diagram of another example of a data transmission method applicable to this application;
FIG. 11 is a schematic diagram of another example of a data transmission method applicable to this application;
FIG. 12 is a schematic diagram of an example of a data transmission apparatus applicable to this application;
FIG. 13 is a schematic diagram of another example of a data transmission apparatus applicable to this application;
FIG. 14 is a schematic diagram of an example of a terminal device applicable to this application; and
FIG. 15 is a schematic diagram of an example of a network device applicable to this application.

## DESCRIPTION OF EMBODIMENTS

The following describes technical modes of this application with reference to accompanying drawings.

The following describes technical solutions of this application with reference to accompanying drawings.

The technical solutions of the embodiments of this application may be applied to various communications systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a Long Term Evolution Advanced LTE-A system, a universal mobile telecommunications system (universal mobile telecommunications system, UMTS), a worldwide interoperability for microwave access (worldwide interoperability for microwave access, WiMAX) communications system, a 5th generation (5th generation, 5G) system, or a new radio (new radio, NR) system.

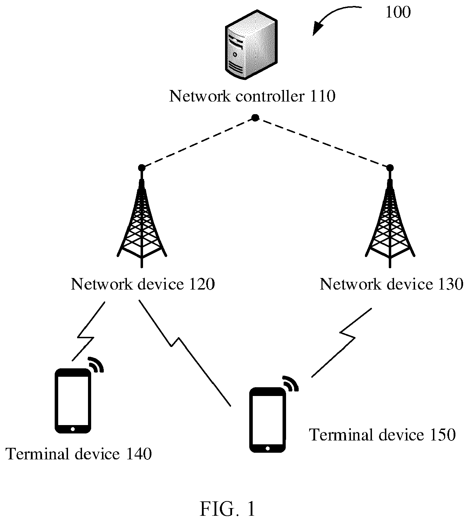

For ease of understanding embodiments of this application, a communications system applicable to embodiments of this application is first described in detail with reference to FIG. 1.

FIG. 1 is a schematic diagram of a communications system 100 to which a data transmission method of this application is applicable. As shown in FIG. 1, the communications system 100 includes a network controller 110, at least one network device (for example, a network device 120 and a network device 130), and at least one terminal device (for example, a terminal device 140 and a terminal device 150).

Specifically, the terminal device 140 and the terminal device 150 may be connected to the network device 120 and the network device 130 in a wireless manner, and the network device 120 and the network device 130 may be connected to the network controller 110 in a wireless or wired manner. The network controller 110, and the network device 120 and the network device 130 may be different independent physical devices, or a function of the network controller 110 and logical functions of the network device 120 and the network device 130 may be integrated into a same physical device, or some functions of the network controller 110 and some functions of the network device 120 and the network device 130 may be integrated into one physical device. A communications network may include a plurality of network devices that can support communication of a plurality of terminal devices. The terminal device may communicate with the network device over a downlink and an uplink. The downlink (which may also be referred to as a forward link) is a communications link from a network device to a terminal device, and the uplink (which may also be referred to as a reverse link) is a communications link from a terminal device to a network device.

The terminal device (for example, the terminal device 140 or the terminal device 150) in this embodiment of this application may be at a fixed location, or may be movable. The terminal device communicates with one or more core networks (core network, CN) (for example, the network controller 110 in FIG. 1) by using a radio access network (radio access network, RAN) (for example, the network device 120 or the network device 130 in FIG. 1). The terminal device may be user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device may be a station (station, ST) in a wireless local area network (wireless local area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA), or a hand-held device with a wireless communications function, a computing device, or another processing device connected to a wireless modem, a vehicle-mounted device, a wearable device, and a next-generation communications system, for example, a terminal device in a 5G network or a terminal device in a public land mobile network (public land mobile network, PLMN) of evolution in the future, which is not limited in this embodiment of this application.

The network device (for example, the network device 120 or the network device 130) in this embodiment of this application may be a device configured to communicate with a terminal device. The network device may be a network device (base transceiver station, BTS) in a Global System for Mobile Communications GSM system or Code Division Multiple Access CDMA system, or may be a network device (NodeB, NB) in a Wideband Code Division Multiple Access WCDMA system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, and a network device in a 5G system, such as a transmission point (transmission point, TP), a transmission reception point (transmission reception Point, TRP), a base station, or a small cell device, or may be a network device in a public land mobile network PLMN of evolution in the future, which is not limited in this embodiment of this application.

In this embodiment of this application, the network device 120 and the network device 130 may be controlled and/or scheduled by the network controller 110. The network controller 110 may perform unified resource scheduling and management on a plurality of controlled network devices based on information obtained and maintained from each network device. For example, the network controller 100 sends a control message and/or indication information, and the like to the plurality of controlled network devices. The network device 120 and the network device 130, and the terminal device 140 and the terminal device 150 may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in this embodiment of this application.

It should be understood that the network controller 110 may be an independent physical device (as shown in FIG. 1), or may be a software and/or hardware function module integrated into the network device. This is not particularly limited in this application.

It should be noted that a network device (for example, the network device 120) accessing a terminal device (for example, the terminal device 140) is referred to as a serving network device. After being powered on, the terminal device 140 may select a suitable or acceptable serving cell by searching for a serving cell, and then complete a connection to a network side through an attach procedure. After completing the attach procedure, the terminal device 140 may perform data communication with the network device 120.

It should be noted that this embodiment of this application may be applicable to downlink signal transmission, or may be applicable to uplink signal transmission. For the downlink data transmission, a sending device is a network device, and a corresponding receiving device is a terminal device. For the uplink data transmission, a sending device is a terminal device, and a corresponding receiving device is a network device. A signal transmission direction is not limited in this embodiment of this application.

Communication between the network device and the terminal device and communication between terminal devices may be performed by using a licensed spectrum (licensed spectrum), an unlicensed spectrum (unlicensed spectrum), or both the licensed spectrum and the unlicensed spectrum. Communication between the network device and the terminal device and between the terminal devices may be performed by using a spectrum below 6 gigahertz (GHz), or a spectrum above 6 GHz, or both a spectrum below 6 GHz and a spectrum above 6 GHz. A spectrum resource used between the network device and the terminal device is not limited in this embodiment of this application.

It should be understood that FIG. 1 is merely a simplified schematic diagram of an example for ease of understanding. The communications system 100 may further include another network device, for example, a wireless relay device and a wireless backhaul device. Similarly, the system may also include more terminal devices. Quantities of network controllers, network devices, and terminal devices included in the mobile communications system are not limited in this embodiment of this application. It should be further understood that the system may also be referred to as a network. This is not limited in this application.

To facilitate understanding of this embodiment of this application, terms used in this application are first briefly described.

1. Subcarrier spacing (subcarrier spacing, SCS). Currently, 5 types of SCSs are defined in the current standard, and sequence numbers $\mu$ of the SCSs are 0 to 4, respectively corresponding to 15 kHz, 30 kHz, 60 kHz, 120 kHz, and 240 kHz.

2. Cell. From a perspective of resource management or mobility management of a higher layer (for example, a protocol layer above a physical layer such as a radio resource control layer or a media access control layer), a coverage area of each network device may be divided into one or more cells. Currently, one downlink carrier may be configured for one cell, and optionally, at least one uplink carrier is further configured for the cell. One bandwidth part (bandwidth part, BWP) is a part of bandwidth on a carrier of a cell. The cell is a general name. For a terminal device, a cell that provides a service for the terminal device is referred to as a serving cell. The cell in this application may alternatively be referred to as a serving cell.

It should be understood that, in carrier aggregation (carrier aggregation, CA), the terminal device can perform transmission on a plurality of component carriers (component carriers, CCs). Bandwidth of each component carrier may be a value of 5 megahertz (MHz), 10 MHz, 50 MHz, 100 MHz, or the like. For FDD carrier aggregation, a quantity of aggregated downlink carriers needs to be greater than or equal to a quantity of aggregated uplink carriers; and for TDD carrier aggregation, a quantity of aggregated downlink carriers needs to be equal to a quantity of aggregated uplink carriers. When the terminal device does not use carrier aggregation, one serving cell is configured for the terminal device, and the serving cell is a primary serving cell (primary serving cell, PCell); and when the terminal device uses carrier aggregation, a plurality of serving cells are configured for the terminal device, and the plurality of serving cells include one primary serving cell and one or more secondary serving cells (secondary serving cell, SCell).

3. Supplementary uplink (supplementary uplink, SUL). One serving cell includes one DL CC, one UL CC, and one or more SUL CCs. In the current standard, the terminal device may select one CC from the UL CC and the SUL CC to perform uplink transmission, and the terminal device cannot perform uplink transmission simultaneously on two CCs. For example, a serving cell includes a DL CC and a UL CC on a 3.5 GHz frequency band, and includes an SUL CC on a 2.1 GHz frequency band. The terminal device may better help data transmission on the 3.5 GHz DL CC by transmitting a channel sounding reference signal (sounding reference signal, SRS) on the 3.5 GHz UL CC, or may obtain better uplink coverage by using the 2.1 GHz SUL CC.

4. Dual connectivity (dual connectivity, DC). The DC system includes a master node (master node, MN) and a secondary node (secondary node, SN), that is, a terminal device establishes connections to a plurality of serving cells. The master node is a node connecting a control plane to a CN. The secondary node is also a node connecting a control plane to a CN, but may provide an additional auxiliary radio resource for the terminal device. In a non-DC system, the terminal device communicates with only one network device.

Multi-radio access technology dual connectivity (multi-RAT dual connectivity, MR-DC) converges sites of two different systems. For example, in evolved universal terrestrial radio access-new radio dual connectivity (EUTRA-NR dual connectivity, EN-DC), an LTE eNB is an MN, and an NR gNB is an SN, and in new radio-evolved universal terrestrial radio access dual connectivity (NR-EUTRA dual connectivity, EN-DC), an NR gNB is an MN, and an LTE eNB is an SN.

New radio dual connectivity (new radio dual connectivity, NR-DC) aggregates two NR sites, that is, one NR gNB is an MN, and the other NR gNB is an SN.

For a dual connectivity terminal device, the network device configures a master cell group (master cell group, MCG) and a secondary cell group (secondary cell group, SCG) for the dual connectivity terminal device, where the MCG is a group of serving cells associated with the MN, and the SCG is a group of serving cells associated with the SN.

A primary serving cell in the MCG is a primary cell (primary cell, PCell), a primary serving cell in the SCG is a primary secondary cell (primary secondary cell, PSCell), and another serving cell in the MCG and the SCG is a secondary cell (secondary cell, SCell).

The PCell and the SCell in the MCG are combined by using the carrier aggregation (carrier aggregation, CA) technology. The PSCell and the SCell in the SCG are also combined by using the carrier aggregation technology.

The following describes definitions related to a maximum uplink or downlink transmission rate, a baseband computing capability, and a baseband storage capability in the current standard.

1. Baseband computing capability

It should be understood that the network device needs to schedule a resource of the terminal device based on a baseband computing capability of the terminal device, that is, a total quantity of bits that can be processed by the terminal device in a unit time or a period of time.

In this embodiment of this application, the baseband computing capability may also be referred to as a baseband processing capability and a baseband scheduling capability.

(1) Scheduling of a physical downlink shared channel (physical downlink shared channel, PDSCH) needs to meet the following two constraints.

Constraint 1: Data transmitted by the terminal device on all carriers in one slot or one frequency band combination cannot exceed a maximum transmission rate DataRate.

For example, in a cell group (cell group) including J serving cells, when a transmission time of the PDSCH overlaps an $s_j^{th}$ slot of a $j^{th}$ serving cell, $j \in \{0, 1, 2, ..., J-1\}$, the terminal device does not process the PDSCH at any given moment within an overlapping time if the following condition is not met.

$$\sum_{j=0}^{J-1} \frac{\sum_{m=0}^{M-1} V_{j,m}}{T_{slot}^{\mu(j)}} \leq DateRate \qquad (1)$$

For the $j^{th}$ serving cell, J is a quantity of carriers included in the frequency band combination. M is a quantity of transport blocks (transport block, TB) or carriers or slots in the slot $s_j$. $T_{slot}^{\mu(j)} = 10^{-3} / 2^{\mu(j)}$ is duration of one slot, where $\mu(j)$ is a numerology (numerology) of the $s_j^{th}$ slot of the $j^{th}$ serving cell.

For an $m^{th}$ TB, $V_{j,m} = C' \cdot \lfloor A / C \rfloor$ .

A is a quantity of bits included in the TB.
C is a quantity of code blocks (code block, CB) included in the TB.
$C'$ is a quantity of CBs based on which the network device schedules a time-frequency resource for the TB.

DataRate (in a unit of megabits per second (megabits per second, Mbps)) is a maximum rate that can be transmitted by the terminal device in all configured serving cells. Serving cells that can be simultaneously configured for the terminal device may correspond to any carrier combination or feature set reported by the terminal device.

Constraint 2: Data transmitted by the terminal device on a single carrier in one slot cannot exceed a maximum transmission rate DataRateCC.

For PDSCH transmission of the $j^{th}$ serving cell, when a system has a relatively high requirement on a PDSCH processing delay of the terminal device, that is, a configuration field, for example, processingType2Enabled, or a modulation order of the PDSCH is greater than a threshold, if the following condition is not met, the terminal device does not process the PDSCH.

$$\frac{\sum_{m=0}^{M-1} V_{j,m}}{L \times T_s^{\mu}} \leq DateRateCC \tag{2}$$

L is a quantity of symbols occupied by the PDSCH.

M is a quantity of TBs or carriers or slots included in the PDSCH. $T_s^{\mu} = 10^{-3} / (2^{\mu} \cdot N_{svmb}^{slot})$ is duration of one slot, where $\mu$ is a numerology (numerology) of the $j^{th}$ serving cell.

For an $m^{th}$ TB, $V_{j,m} = C' \cdot \lfloor A / C \rfloor$ .
A is a quantity of bits included in the TB.
C is a quantity of CBs included in the TB.
$C'$ is a quantity of CBs based on which the network device schedules a time-frequency resource for the TB.
DataRateCC (in a unit of Mbps) is a maximum rate that can be transmitted by the terminal device in the configured $j^{th}$ serving cell. Serving cells that can be simultaneously configured for the terminal device may correspond to any carrier combination or feature set reported by the terminal device. A method for calculating a maximum transmission rate of a single CC or a single serving cell is described in the following formula (3), and the calculation includes a scale factor $f(i)$ .
(2) Scheduling constraints on the physical uplink shared channel (physical uplink shared channel, PUSCH).
The scheduling constraints on the PUSCH are the same as scheduling constraints on the PDSCH. In addition, for repeated PUSCH transmission, each PUSCH repetition should also be counted as one PUSCH transmission.

2. Maximum transmission rate

For different frequency bands or frequency band combinations supported by the terminal device, a method for calculating a maximum uplink or downlink transmission rate supported by the terminal device is as follows.
(1) Maximum transmission rate of a terminal in a carrier aggregation, dual connectivity, or multi-connectivity framework.
For an uplink or downlink frequency band combination or feature combination (the feature combination may include a plurality of frequency band combinations), a maximum uplink or downlink transmission rate (that is, DataRate in the baseband computing capability in the previous section 1) that can be supported by the terminal device is a sum of maximum data amounts that can be sent on each carrier or configured serving cell in the frequency band combination within a unit time, where a maximum amount of bits that can be sent on each carrier within a unit time may be determined based on a parameter such as a maximum bit rate, a maximum quantity of layers, a maximum modulation order, and a maximum quantity of frequency domain resources that are supported by the terminal device on the carrier, which is

shown as follows:

$$\text{DataRate (in Mbps)} = 10^{-6} \cdot \sum_{j=1}^{J} \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right) \quad (3)$$

J is a quantity of carriers or serving cells included in the frequency band combination.

$R_{\max}$ is the maximum bit rate supported by each carrier or serving cell. $v_{Layers}^{(j)}$ is the maximum quantity of layers supported by each carrier or serving cell. $Q_m^{(j)}$ is the maximum modulation order supported by each carrier or serving cell.

$f^{(j)}$ is the scale factor on each carrier or serving cell. $T_s^{\mu}$ is an orthogonal frequency division multiplexing (orthogonal frequency division multiplexing, OFDM) symbol length on each carrier or serving cell. $N_{PRB}^{BW(j),\mu}$ is the maximum quantity of frequency domain resources that can be allocated to each carrier or serving cell.

$OH^{(j)}$ is an additional overhead on each carrier or serving cell.

The foregoing formula may also be written as follows:

$$DateRate(\text{in } Mbps) = 10^{-6} \sum_{j=1}^{J} DataRateCC_j \quad (4)$$

J is a quantity of carriers or serving cells included in the frequency band combination; and

$DateRateCC_j$ is a maximum amount of bits that can be sent on each carrier or serving cell in a unit time:

$$DateRateCC(\text{in } Mbps) = \left( v_{Layers}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right) \quad (5)$$

(2) Maximum uplink transmission rate of the terminal device in the SUL framework.

For the maximum uplink transmission rate of the terminal device in the SUL framework, for an uplink frequency band combination or an uplink feature combination (a specific combination may include a plurality of frequency band combinations), a serving cell includes at least two uplink carriers, that is, one UL CC and one or more SUL CCs. A maximum amount of bits that can be sent by the terminal device on each carrier in a unit time is calculated, where the maximum uplink transmission rate of the terminal device is a maximum value of the maximum amount of bits that can be sent on each carrier in the uplink frequency band combination.

3. Baseband storage capability

It should be understood that one of the baseband storage capabilities of the terminal device is an uplink and downlink layer 2 (layer 1, L2) buffer used for uplink transmission and downlink transmission, which may be referred to as an uplink and downlink L2 buffer for short. The uplink and downlink L2 buffer may be understood as a total quantity of bits or bytes that can be stored, by the terminal device, in a radio link control (radio link control, RLC) layer send window, an RLC receive and reassembly window, and a packet data convergence protocol (packet data convergence protocol, PDCP) re-sorting window for all radio bearers.

(1) Uplink and downlink L2 buffer size and air interface transmission delay of a data packet, where the air interface transmission delay may also be referred to as a radio link control round-trip time (radio link control round-trip time, RLC RTT).

Downlink transmission is used as an example. For downlink sending over a radio air interface, a PDCP SDU (that is, an IP packet) is delivered to a PDCP layer through an Internet protocol (Internet protocol, IP) layer, the PDCP layer processes the PDCP SDU to generate a PDCP PDU and delivers the PDCP PDU to an RLC layer, and the RLC layer splits the PDCP PDU into one or more RLC PDUs and delivers the RLC PDUs to a MAC layer and a PHY layer. For downlink reception over the radio air interface, the RLC layer waits to receive all RLC PDUs corresponding to a PDCP SDU and sends the RLC PDUs to the PDCP layer. The PDCP layer sorts the RLC PDUs to generate one PDCP SDU, and delivers the PDCP SDU to the IP layer. An uplink and downlink layer 2 downlink buffer is used to buffer all RLC PDUs corresponding to one PDCP SDU at the RLC layer and the PDCP layer. Some uplink and downlink layer 2 downlink buffer space can be released only when the RLC layer or the PDCP layer receives a last RLC PDU corresponding to the PDCP SDU. A maximum transmission delay of one RLC SDU is recorded as the RLC RTT, and duration of the RLC SDU can also be regarded as an air interface delay required by a system for downlink transmission.

In the current standard, the uplink and downlink L2 buffer is designed mainly for an eMBB service, such as web page reading and online watching of long videos. These services have a relatively low delay requirement, for example, 50 ms. It may be considered that the terminal device continuously transmits data in a relatively long communications process, that is, a service duty cycle is 1. Therefore, when the terminal device performs continuous transmission in a period of time, duration of the period of time is an air interface transmission delay, and the terminal device performs transmission based on a maximum downlink (uplink) transmission rate of the terminal device in each unit transmission time. A total amount of bits transmitted by the terminal device in the period of time is a downlink (uplink) L2 buffer size, that is, the L2 downlink (uplink) buffer size is a product of a peak rate (MaxDLDataRate, that is, $R_{DL}$, or MaxULDataRate, that is, $R_{UL}$) of the terminal device and an air interface transmission delay ($D_{DL}$ or $D_{UL}$). The uplink and downlink L2 buffer size is calculated as follows: $R_{DL} * D_{DL} + R_{UL} * D_{UL}$.

In the current standard, a value of an air interface transmission delay corresponding to one cell group is determined based on a minimum numerology corresponding to all cells in the cell group. $R_{DL}$ or $R_{UL}$ is calculated by using the foregoing method of the maximum transmission rate. For example, a 15 kHz subcarrier spacing corresponds to a 50 ms air interface transmission delay, a 30 kHz subcarrier spacing corresponds to a 40 ms air interface transmission delay, a 60 kHz subcarrier spacing corresponds to a 30 ms air interface transmission delay, and a 120 kHz subcarrier spacing corresponds to a 20 ms air interface transmission delay.

(2) The L2 buffer size of the MR-DC or NR-DC system is related to the maximum uplink or downlink transmission rate $R_{DL}$ or $R_{UL}$.

In a current MR-DC or NR-DC standard, for uplink transmission of the MN and the SN, a maximum buffer size of the uplink and downlink L2 may be calculated according to the following two formulas:

$$- \text{MaxULDataRate\_MN} * \text{RLCRTT\_MN} + \text{MaxULDataRate\_SN} * \text{RLCRTT\_SN} + \text{MaxDLDataRate\_SN} * \text{RLCRTT\_SN} + \text{MaxDLDataRate\_MN} * (\text{RLCRTT\_SN} + \text{X2/Xn delay} + \text{Queuing in SN});$$

and

$$- \text{MaxULDataRate\_MN} * \text{RLCRTT\_MN} + \text{MaxULDataRate\_SN} * \text{RLCRTT\_SN} + \text{MaxDLDataRate\_MN} * \text{RLCRTT\_MN} + \text{MaxDLDataRate\_SN} * (\text{RLCRTT\_MN} + \text{X2/Xn delay} + \text{Queuing in MN});$$

where,

X2/Xn delay + Queuing in SN = 25 ms if SCG is NR, and 55 ms if SCG is EUTRA
X2/Xn delay + Queuing in MN = 25 ms if MCG is NR, and 55 ms if MCG is EUTRA
RLC RTT for EUTRA cell group = 75 ms
RLC RTT for NR cell group is shown in the maximum transmission rate of 2 described above.

A communications device in the terminal device may generally include a baseband processor, a radio frequency transceiver, a radio frequency front-end, and an antenna.

The baseband processor mainly includes a micro control unit (micro control unit, MCU) and a digital signal processor (digital signal processor, DSP). The MCU is mainly configured to run baseband protocol stack code, for example, a layer 2 (layer 2, L2, including PDCP, RLC, and MAC) scheduling algorithm and a layer 3 (layer 3, L3, including RRC), L2, and layer 1 (layer 1, L1, including a physical layer PHY) protocol procedure implementation; and the DSP is mainly configured to implement an L1 core algorithm, for example, encoding and decoding, Fourier transform or inverse Fourier transform, and cyclic redundancy code check. In general, the baseband processor is responsible for processing original bit information to generate a digital signal. The radio frequency transceiver mainly includes a digital-to-analog converter, an analog-to-digital converter, a crystal oscillator, a phase-locked loop, and the like. Specifically, a radio frequency transmitter is responsible for converting a digital signal into a radio frequency analog signal, and a radio frequency receiver is responsible for converting the radio frequency analog signal into a digital signal. The radio frequency front-end mainly includes a power amplifier, a low noise amplifier, a filter, a double/multiplexer, and a switch. The radio frequency front-end is mainly responsible for filtering and amplifying an analog signal. The antenna is configured to send or receive an analog signal.

A radio frequency part of the terminal device includes a radio frequency transceiver, a radio frequency front-end, and an antenna. A hardware capability is mainly related to one or more parameters of a transmission frequency band, a transmission bandwidth, a CA capability, a multiple-input multiple-output (multiple-input multiple-output, MIMO) capability, a highest modulation order, and the like of the terminal device. In other words, the hardware capability of the terminal device is related to a maximum uplink or downlink transmission rate requirement of the terminal device.

The baseband part of the terminal device includes a baseband processor. Downlink receiving is used as an example. In a period of time (less than an air interface delay requirement) from the terminal device starting to receive data of an IP packet to all data of the IP packet being received, the baseband processor needs to store and process all data of the IP packet received in the period of time. Apart of computing and storage space of the baseband processor can be released only when a baseband protocol stack delivers the data of the IP packet to an upper layer. Therefore, a baseband processing capability, including a baseband computing capability and a baseband storage capability, is mainly related to a maximum total quantity of bits that need to be processed by the terminal device in a period of time.

FIG. 2 is a schematic diagram of an example in which a hardware capability and a baseband capability of a terminal device of an eMBB service and an AR or VR service are decoupled. It should be noted that, a baseband capability of an eMBB terminal device is related to a baseband processing delay such as a data packet size, an uplink and downlink L2 buffer size, and a hybrid automatic repeat request (hybrid automatic repeat request, HARQ) soft buffer size; and a hardware capability is related to a parameter such as a frequency band combination, bandwidth, a maximum modulation order, a maximum quantity of layers, a maximum bit rate, and a bandwidth scale factor. A baseband capability of an AR or VR terminal device is related to a baseband processing delay such as a data packet size, an uplink and downlink L2 buffer size, and a HARQ soft buffer size. A hardware capability is related to a parameter such as a frequency band combination, bandwidth, a maximum modulation order, a maximum quantity of layers, a maximum bit rate, and a bandwidth scale factor.

FIG. 3 is a schematic diagram of an example of data packet transmission of an eMBB service and an AR or VR service. As shown in FIG. 3, the VR or AR service differs from the eMBB service. The eMBB service has a relatively low delay requirement, and a delay requirement for an air interface is usually greater than 50 ms, which is recorded as a second time period. It can be considered that data is continuously transmitted between the network device and the terminal device in a communications process within any second time period, that is, a service duty cycle is 1. A total quantity of bits that need to be processed by the terminal device in a first time period is equal to a maximum total quantity of bits that can be transmitted by the terminal device in the second time period. When the terminal device performs continuous transmission in the second time period, and the terminal device performs transmission based on a maximum uplink transmission rate or/and an uplink transmission rate of the terminal device in each unit transmission time, a total amount of bits transmitted by the terminal device in the second time period is a maximum total amount of bits of the terminal device in the second time period.

However, most AR or VR services are periodic services, that is, when a data packet arrives, another data packet arrives after a first time period, where the first time period is a data packet arrival period for a periodic service. The periodic service is usually a real-time video, and has a relatively high requirement for a delay. For example, a video frame rate is 60 frames per second (frames per second, fps), an arrival period of a data packet is about 16 ms, and an air interface transmission delay of a data packet is required to be 10 ms. It may be considered that both the network device and the terminal device have no data to be transmitted in each arrival period of the data packet, that is, the service duty cycle is 10/16, which is less than 1. A total quantity of bits that need to be processed by the terminal device in the first time period is less than a maximum total quantity of bits that can be transmitted by the terminal device in the first time period. When the terminal device performs continuous transmission in the first time period, and the terminal device performs transmission based on a maximum uplink transmission rate or/and a maximum downlink transmission rate of the terminal device in each unit transmission time, a total quantity of bits transmitted by the terminal device in the first time period is a maximum total quantity of bits of the terminal device in the second time period.

Therefore, for a terminal device that supports the current standard, when a hardware capability meets a maximum uplink or downlink transmission rate requirement of the VR or AR service, a baseband capability of the terminal device is redundant. In other words, costs of a terminal device that mainly provides a VR or AR service can be reduced. However, currently, there is no solution to how to reduce costs of the terminal device based on this.

In view of this, this application proposes, for a VR or AR service feature, a terminal device type in which a baseband capability is decoupled from a hardware capability, and proposes a communications and transmission method for this terminal device type. The hardware capability and baseband capability of a terminal device are decoupled based on a feature of the terminal device on a service time domain. This is applicable to VR Cloud Gaming, common Cloud Gaming, and an immersive AR gaming service, and a communications method of the terminal device in an NR independent networking scenario and an MR-DC or NR-DC scenario is provided. The hardware capability and the baseband capability of the terminal device are further decoupled based on a feature of the terminal device on a service frequency domain.

For ease of understanding of embodiments of this application, the following descriptions are provided.

In this application, "indicate" may include "directly indicate" and "indirectly indicate". When a piece of indication information is described as indicating A, the indication information may directly indicate A or indirectly indicate A, but it does not necessarily indicate that the indication information carries A.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

In this application, the "uplink and downlink L2 buffer size" may include an uplink L2 buffer size and/or a downlink L2 buffer size, and the "maximum uplink and downlink transmission rate" may include a maximum uplink transmission rate and/or a maximum downlink transmission rate. It should be understood that the uplink and downlink L2 buffer size corresponds to the maximum uplink and downlink transmission rate.

"First", "second", and various numbers in the following embodiments are merely used for differentiation for ease of description, and are not intended to limit the scope of embodiments of this application. For example, the terms are used to differentiate between different indication information.

In embodiments described below, "protocol definition" may be implemented by prestoring corresponding code or a corresponding table in a device (for example, a terminal device and a network device), or may be implemented in another manner that may indicate related information. A specific implementation is not limited in this application. "Protocols" in embodiments of this application may be standard protocols in the communications field, and may include, for example, an LTE protocol, an NR protocol, and a related protocol applied to a future communications system. This is not limited in this application.

In embodiments shown below, "can be communicated", "can be transmitted", and "can be processed" may be equivalent; "transmission", "communication", and "processing" may be equivalent; and "a quantity of bits", "an amount of bits", "bit quantity", and "data amount" may also be equivalent. This is not specifically limited in this application.

"At least one" means one or more, and "a plurality of" means two or more. "and/or" describes an association relationship between associated objects, and represents that three relationships may exist. For example, A and/or B may represent the following cases: only A exists, both A and B exist, and only B exists, where A and B may be singular or plural. A character "/" generally indicates an "or" relationship between the associated objects. "At least one of the following items (pieces)" or a similar expression thereof refers to any combination of these items, including any combination of singular or plural items (pieces). For example, at least one of a, b, and c may represent: a, b, c, a and b, a and c, b and c, or a, b, and c, where a, b, and c each may be singular or plural.

The following describes in detail the wireless communications method in embodiments of this application with reference to the accompanying drawings.

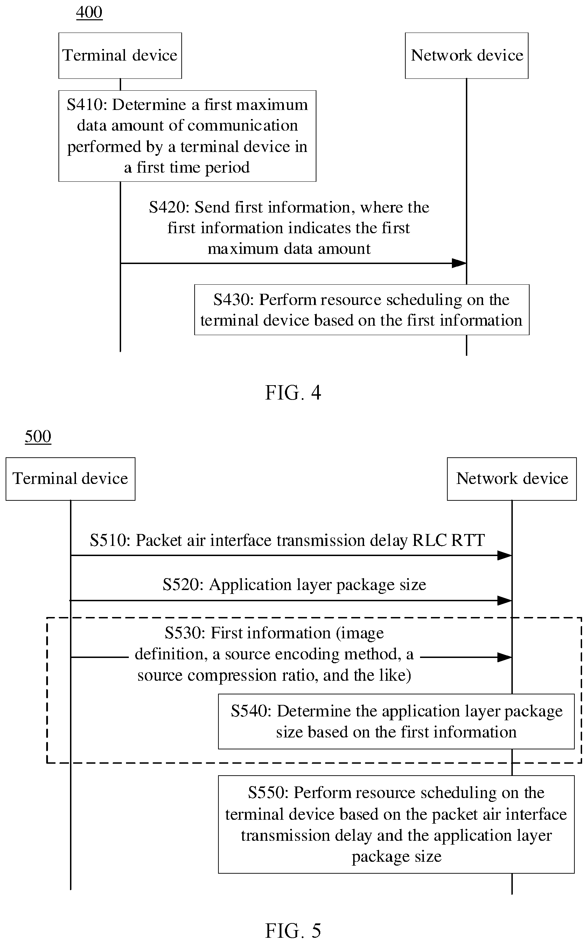

FIG. 4 is a schematic diagram of an example of a data transmission method applicable to this application. A specific implementation method 400 includes the following steps.

S410: A terminal device determines a first maximum data amount of communication performed by the terminal device in a first time period.

The first time period is a data transmission period of the terminal device, and the maximum data amount of communication performed by the terminal device in the first time period is less than a second maximum data amount of continuous communication performed by the terminal device in the first time period.

It should be understood that, for a terminal device of an AR or VR service, service data of the terminal device arrives periodically, that is, when a data packet arrives, another data packet arrives after the first time period. For example, a value of the first time period is an absolute time value, or a quantity of slots, a quantity of frames, or a quantity of symbols corresponding to a subcarrier. Herein, the first time period may be understood as an arrival period of a data packet in a periodic service, for example, 16 ms.

A total quantity of bits that can be transmitted by the terminal device in the first time period is less than a maximum total quantity of bits that can be transmitted by the terminal device in the first time period. When the terminal device performs continuous transmission in the first time period, and the terminal device performs transmission based on a maximum uplink transmission rate of the terminal device and/or a maximum downlink transmission rate of the terminal device in each unit transmission time, a total quantity of bits transmitted by the terminal device in the first time period is a maximum total quantity of bits of the terminal device in the first time period. In an embodiment of this application, a total quantity of bits that need to be processed by the terminal device of the AR or VR service in the first time period is less than a product of a maximum uplink transmission rate and/or a maximum downlink transmission rate requirement and an air interface delay requirement. In other words, an average downlink transmission rate at which the terminal device can perform transmission in the first time period is less than a maximum downlink transmission rate of the terminal device, and/or an average uplink transmission rate at which the terminal device can perform transmission in the first time period is less than a maximum uplink transmission rate of the terminal device. The average downlink transmission rate is a total quantity of bits that can be transmitted by the terminal device in the downlink in the first time period divided by the first time period, and the average uplink transmission rate is a total quantity of bits that can be transmitted by the terminal device in the uplink in the first time period divided by the first time period.

The maximum uplink and downlink transmission rate herein includes a maximum uplink transmission rate and a maximum downlink transmission rate. For an uplink or downlink frequency band combination, a maximum uplink or downlink transmission rate that can be supported by a user is shown in the above formula (3).

It should be noted that transmission may be receiving and/or sending of data, or may be sending and/or receiving data. The first maximum data amount of communication performed by the terminal device in the first time period may be understood as a total quantity of bits of uplink and/or downlink communications data that can be processed by the terminal device within 10 ms. The second maximum data amount of the continuous communication performed by the terminal device in the first time period may be understood as that the terminal device transmits data continuously to the network device in a 16-ms communications process. As shown in FIG. 3, for the AR or VR service, the first maximum data amount may be understood as a communications data amount of the terminal device within 10 ms, that is, an area corresponding to a shadow part; and the second maximum data amount may be understood as a data amount of continuous communication of the terminal device within 16 ms, that is, an area corresponding to a shadow part and a black part.

In this embodiment of this application, the first maximum data amount may be directly determined based on a data packet size, or may be further determined based on a hardware capability and a service feature of the terminal. The second maximum data amount of the continuous communication performed in the first time period may be determined based on the first time period and the maximum uplink transmission rate and/or the maximum downlink transmission rate of the terminal device.

As an example rather than a limitation, the maximum communications data amount of the terminal device in the first time period may include an uplink and downlink layer 2 buffer size.

It should be understood that one of baseband storage capabilities of the terminal device is the L2 buffer size. The uplink and downlink L2 buffer may be understood as a total quantity of bits or bytes that can be stored, by the terminal device, in an RLC sending window, an RLC receiving and reassembly window, and a PDCP reordering window for all radio bearers.

S420: The terminal device sends first information to the network device.

Correspondingly, the network device receives the first information from the terminal device.

The first information indicates the first maximum data amount of communication performed by the terminal device in the first time period.

In a possible implementation, the first information includes one or more of the following pieces of information: image definition, a source encoding method, a source compression ratio, and a first index, and the first index corresponds to the first maximum data amount.

The downlink is used as an example, and the terminal device may report downlink video definition (for example, 4K, 8K, or 32K), a source encoding method (for example, H264 or H265), and a source compression ratio (for example, 30% or 60%). A correspondence among the video definition, the source encoding method, and the source compression ratio is predefined by using a protocol, so that the network device can further determine the first maximum data amount based on the first information received from the terminal device. For example, when the first information includes the video definition 4K, the source encoding method H264, and the source compression ratio 30%, the first maximum data amount of communication performed by the terminal device in the first time period is indicated as 100 bits. For another example, when the first information includes the video definition 8K, the source encoding method H264, and the source compression ratio 60%, the maximum data amount of communication performed by the terminal device in the first time period is indicated as 200 bits. Therefore, after receiving 4K, H264, and 30%, the network device may determine that a maximum communications data amount of the terminal device in a transmission period of a periodic service is 100 bits, and the like.

For example, the terminal device reports a first index value "1" to the network device, and the first index value "1" corresponds to a data packet of 100 bits. In other words, the index value "1" indicates that the first maximum data amount of communication performed by the terminal device in the first time period is 100 bits.

In another possible implementation, the first information further includes one or more of the following pieces of information: a first time period (that is, a data packet arrival period, for example, 16 ms), an air interface transmission delay of a data packet, a duty cycle of data packet transmission, a core network delay of a data packet, and a local rendering delay. Herein, the air interface transmission delay of a data packet is less than the first time period.

It should be understood that this implementation may be considered as a time used by the terminal device to directly or indirectly report the first maximum data amount processed by the terminal device in the first time period, that is, the air interface transmission delay of a data packet, for example, 10 ms.

It should be understood that the air interface transmission delay of a data packet may be determined by using a data packet arrival period, a duty cycle of data packet transmission or a core network delay of a data packet, and a local rendering delay.

For example, the terminal device directly reports the air interface transmission delay (for example, 10 ms) of a data packet. Alternatively, the terminal device combines and reports a plurality of pieces of information in the first information. For example, the air interface transmission delay of a data packet may be determined by using the first time period (for example, 16 ms) and the duty cycle $\rho$ of data packet transmission; or the air interface transmission delay of a data packet may be determined by using the first time period (for example, 16 ms), the core network delay of a data packet, and the local rendering delay (for example, 6 ms), or 1 - duty cycle $\delta$ of data packet transmission.

It should be understood that a value of the air interface transmission delay may be an absolute time value, or a quantity of slots, a quantity of frames, or a quantity of symbols corresponding to a subcarrier, for example, 10 ms.

Further, the terminal device sends second information to the network device.

Correspondingly, the network device receives the second information from the terminal device, and the network device determines the maximum uplink transmission rate and/or the maximum downlink transmission rate of the terminal device based on the second information.

The second information is used to determine the maximum uplink transmission rate and/or the maximum downlink transmission rate of the terminal device, and the second information includes one or more of the following pieces of information: bandwidth, a subcarrier spacing or slot duration, a maximum modulation order, a maximum transmission code rate, a maximum quantity of transmission layers, and a scale factor of each carrier in a carrier combination.

For example, the second information may include hardware capability information of the terminal device. In this embodiment of this application, the hardware processing capability may be understood as a maximum uplink transmission rate and/or a maximum downlink transmission rate of the terminal device.

It should be understood that, for an AR or VR service capability, to ensure decoupling between a hardware capability and a baseband capability, the hardware capability of the terminal device may remain unchanged.

Therefore, based on one or more parameters in the first information, for example, the first time period (that is, the data packet arrival period, for example, 16 ms), the air interface transmission delay of a data packet, the duty cycle of data packet transmission, the core network delay of a data packet, and the local rendering delay, and one or more parameters in the second information, for example, the bandwidth, the subcarrier spacing or slot duration, the maximum modulation order, the maximum transmission code rate, the maximum quantity of transmission layers, and the scale factor of each carrier in the carrier combination, the network device can further determine the first maximum data amount of communication performed by the terminal device in the first time period.

As an example rather than a limitation, the first maximum data amount of communication performed by the terminal device in the first time period may be determined in the following manners: determining, based on a data packet size, the first maximum data amount of communication performed by the terminal device in the first time period; or determining, based on the air interface transmission delay of a data packet and the maximum uplink transmission rate and/or the maximum downlink transmission rate of the terminal device, the first maximum data amount of communication performed by the terminal device in the first time period.

S430: The network device performs resource scheduling on the terminal device based on the first information.

In a possible implementation, the network device sends scheduling information to the terminal device. Correspondingly, the terminal device receives the scheduling information from the network device. In addition, the terminal device determines, based on whether the scheduling information meets a constraint condition, whether to send or receive a PDSCH and/or a PUSCH.

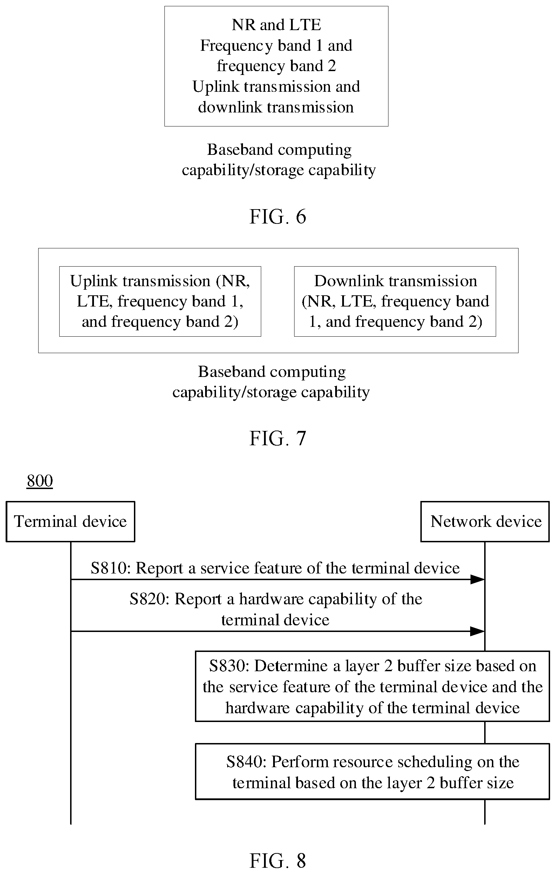

In a possible implementation, for a terminal device shown in FIG. 6, different frequency bands and different systems share a baseband computing resource, and uplink and downlink have independent baseband computing resources; or different frequency bands, different systems, and uplink and downlink share a storage resource. The network device needs to meet the following constraint conditions for both uplink transmission and downlink transmission.

For example, when $TotalData_{UL} + TotalData_{DL} < F_{total}$, the PUSCH is sent and/or the PDSCH is received, where the first time period includes N time units, the scheduling information is used to schedule the PUSCH and/or the PDSCH, and includes a total quantity $TotalData_{UL}$ of bits that the network device schedules the terminal device to send on the PUSCH and/or a total quantity $TotalData_{DL}$ of bits that the network device schedules the terminal device to transmit on the PDSCH from a time unit (N - K) to a current scheduling time unit K, $F_{total}$ is a second maximum data amount, and N, K, and N - K are positive integers greater than or equal to 0.

In other words, if a total amount of bits of the uplink data and/or the downlink data scheduled by the network device in the first time period is greater than the first maximum data amount used by the terminal device in the transmission period of the periodic service, the terminal device may not process corresponding scheduling information.

In another possible implementation, for a terminal device shown in FIG. 7, different frequency bands and different systems share a baseband computing resource, and uplink and downlink have independent baseband computing resources. In this case, in scheduling performed by the network device on the terminal device, downlink scheduling and uplink scheduling should meet different constraint conditions respectively; or different frequency bands and different systems share a storage resource, and uplink and downlink have independent storage resources. The network device separately meets different constraint conditions for uplink transmission and downlink transmission.

For example, for downlink transmission, when $TotalData_{DL} < F_{tatalDL}$, the PUSCH is sent, where the first time period includes N time units, the scheduling information is used to schedule the PDSCH, and includes a total quantity $TotalData_{DL}$ of bits that the network device schedules the terminal device to send on the PDSCH from a time unit (N - K) to a current scheduling time unit K, $F_{tatalDL}$ is the second maximum data amount, and N, K, and N - K are positive integers greater than or equal to 0.

For uplink transmission, when $TotalData_{UL} < F_{tatalUL}$, the PUSCH is sent, where the first time period includes N time units, the scheduling information is used to schedule the PUSCH, and includes a total quantity $TotalData_{UL}$ of bits that the network device schedules the terminal device to send on the PUSCH from a time unit (N - K) to a current scheduling time unit K, $F_{tatalUL}$ is the second maximum data amount, and N, K, and N - K are positive integers greater than or equal to 0.

In other words, after determining the first maximum data amount of communication performed by the terminal device in the first time period and the maximum data amount of continuous communication performed by the terminal device in the first time period, the network device can better schedule an uplink resource and/or a downlink resource of the terminal device when a constraint condition is met.

It should be understood that, in some implementations, with reference to the first aspect or the second aspect, in some implementations, a manner of carrying the first information and the second information in this application may be but is not limited to one or a combination of two of radio resource control signaling and media access control (media access control, MAC) layer signaling. The radio resource control signaling includes radio resource control (radio resource control, RRC) signaling; the MAC layer signaling includes MAC control element (MAC control element, MAC CE) signaling; and the scheduling information may be carried in physical layer (physical, PHY) signaling, and the physical layer signaling includes downlink control information (downlink control information, DCI) signaling and the like.

According to the solution provided in this application, the first maximum data amount of the terminal device in a periodic service cycle is reported, so that the network device considers a baseband capability of the terminal device during resource scheduling, thereby effectively reducing costs of the terminal device and optimizing communication of the AR or VR service.

For AR and VR terminal devices that serve different services, specific implementations for the terminal device are different.

FIG. 5 is a schematic diagram of an example of a data transmission method applicable to this application. A hardware capability of a terminal device is decoupled from a baseband capability based on a feature of the terminal device on a service time domain, and a data packet size and an air interface transmission delay of a data packet are reported, so that a network device effectively schedules a resource for the terminal device, to better adapt to a specific service type. For example, the data transmission method is applicable to a terminal device type of a VR Cloud Gaming video call service, and both an uplink and a downlink of the terminal device type are VR services. Specific implementation step 500 includes the following steps.

S510: The terminal device sends a data packet arrival period (that is, an example of first information) to the network device.

Correspondingly, the network device receives the data packet arrival period from the terminal device.

The data packet arrival period may be understood as a transmission period of an AR or VR periodic service, for example, a data packet arrival period $P_{DL}$ of an uplink periodic service and a data packet arrival period $P_{UL}$ of a downlink periodic service. For example, as shown in FIG. 3, the data packet arrival period is 16 ms.

It should be understood that a value of the data packet arrival period may be an absolute time value, or a slot, a quantity of frames, a quantity of symbols, or the like corresponding to a sub carri er.

In a possible implementation, the terminal device may further separately report a value $D_{DL}$ of a downlink air interface transmission delay and a value $D_{UL}$ of an uplink air interface transmission delay. For example, for a weak-interaction VR Cloud Gaming service, the terminal device separately reports a downlink air interface transmission delay $D_{DL}$ and an uplink air interface transmission delay $D_{UL}$, a data packet arrival period $P_{DL}$ of an uplink periodic service, and a data packet arrival period $P_{UL}$ of a downlink periodic service. $D_{DL}$, $D_{UL}$, $P_{DL}$, and $P_{UL}$ may be measured in "slot", "subframe", or "frame", or a corresponding reference parameter set (numerology) may be predefined as a parameter set 0 or another value by using a protocol, and $D_{DL}$, $D_{UL}$, $P_{DL}$, and $P_{UL}$ may be measured in an absolute time, for example, a millisecond (ms).

The air interface transmission delay of a data packet may include a time from a time when the terminal device starts to receive data of a data packet to a time when all the data of the data packet is received.

For example, the terminal device may report an air interface transmission delay of only one data packet, and a value of the air interface transmission delay may be used for uplink transmission or downlink transmission. $D_{DL}$ and $D_{UL}$ are measured in slots. For example, for a strong-interaction VR Cloud Gaming service, because an uplink service and a downlink service are symmetric, the terminal device may report only one parameter for downlink transmission or uplink transmission.

S520: The terminal device sends a data packet size (that is, an example of the first information) to the network device.

Correspondingly, the network device receives the data packet size from the terminal device.

The data packet size indicates a first maximum data amount of communication performed by the terminal device in the first time period. It should be noted that a data packet size at an application layer matches an uplink and downlink layer 2 buffer size, that is, the data packet size may be approximately considered as the uplink and downlink layer 2 buffer size. In this embodiment of this application, a hardware capability of the terminal device may remain unchanged, that is, the terminal device uses general radio frequency hardware.

In this implementation, the terminal device explicitly indicates the data packet size at the application layer to the network device.

It should be understood that a service feature of AR or VR includes one or more of the following parameters: a data packet size, an original data packet size, a compression encoding method, and the like.

In a possible implementation, for a weak-interaction VR Cloud Gaming service, the terminal device may separately report a packet size $F_{DL}$ of a downlink periodic service and a packet size $F_{UL}$ of an uplink periodic service. For example, the terminal device directly reports the packet size $F_{DL}$ bits corresponding to the downlink periodic service and the packet size $F_{UL}$ bits corresponding to the uplink periodic service. $F_{DL}$ and $F_{UL}$ are measured in bits.

In another possible implementation, for a strong-interaction VR Cloud Gaming service, the terminal device may also report a value, namely, F bits, of only one data packet size, and the value of F may be used for uplink transmission or downlink transmission. For example, because an uplink service and a downlink service of the strong-interaction VR Cloud Gaming service are symmetric, the terminal device may report only one parameter, and the parameter may be applicable to downlink transmission or uplink transmission.

S530: The terminal device may send one or more of the following pieces of information to the network device: image definition, a source encoding method, a source compression ratio, and the like (that is, an example of the first information).

Correspondingly, the network device receives one or more of the following pieces of information from the terminal device: image definition, a source encoding method, a source compression ratio, and the like.

For example, the terminal device reports downlink video definition (4K, 8K, 32K, or the like), a source encoding method (H264, H265, or the like), and a source compression ratio (30%, 60%, or the like). A correspondence among the video definition, the source encoding method, and the source compression ratio is predefined by using a protocol. For example, the video definition 4K, the source encoding method H264, and the source compression ratio 30% correspond to each other, and indicate that an application packet size is 100 bits. For another example, the video definition 8K, the source encoding method H264, and the source compression ratio 60% correspond to each other, and indicate that an application packet size is 200 bits.

S540: The network device determines the data packet size based on one or more of the following pieces of information: image definition, a source encoding method, a source compression ratio, and the like.

For example, the network device may determine, by using the foregoing parameters (the image definition, the source encoding method, the source compression ratio, and the like), a data packet size $F_{DL}$ corresponding to a downlink periodic service. Similarly, the network device may also determine, based on the uplink video definition, the source encoding method, and the source compression ratio that are reported by the terminal device, the data packet size $F_{UL}$ corresponding to the uplink periodic service. For example, when the first information received by the network device includes video definition 4K, the source encoding method H264, and the source compression ratio 30%, the network device may determine, based on protocol predefinition, that the data packet size is 100 bits, or the like.

Optionally, the terminal device may further send a first index to the network device. The first index corresponds to the first maximum data amount, that is, indicates the data packet size, so that after receiving the first index from the terminal device, the network device may determine a corresponding data packet size based on the first index.

It should be understood that in step S510 to step S540, the terminal device may send a parameter to the network device by using the first information, to directly or indirectly indicate the first maximum data amount of communication performed by the terminal device in the first time period.

It should be noted that a baseband computing capability and a baseband storage capability of the terminal device are related to the foregoing parameters $D_{DL}$ and $D_{UL}$, and $F_{DL}$ and $F_{UL}$.

The uplink and downlink layer 2 buffer size $F_{total}$ is calculated in the following manners.

In a possible implementation, for a terminal device shown in FIG. 6, different frequency bands and different systems share a baseband computing resource, and uplink and downlink have independent baseband computing resources; or different frequency bands, different systems, and uplink and downlink share a storage resource.

For example, the uplink and downlink layer 2 buffer size $F_{total}$ corresponding to uplink and downlink transmission of the terminal device is determined by a data packet size $F_{DL}$ of a downlink periodic service and a data packet size $F_{UL}$ of an uplink periodic service, that is, $F_{total} = F_{DL} + F_{UL}$.

In another possible implementation, for a terminal device shown in FIG. 7, different frequency bands and different systems share a baseband computing resource, and uplink and downlink have independent baseband computing resources. In this case, in scheduling performed by the network device on the terminal device, downlink scheduling and uplink scheduling should meet different constraint conditions respectively; or different frequency bands and different systems share a storage resource, and uplink and downlink have independent storage resources.

For example, an uplink and downlink layer 2 buffer size $F_{total\ DL}$ corresponding to downlink transmission of the terminal device is determined by a data packet size $F_{DL}$ of a downlink periodic service, that is, $F_{total\ DL} = F_{DL}$; and an uplink and downlink layer 2 buffer size $F_{total\ UL}$ corresponding to uplink transmission of the terminal device is determined by a data packet size $F_{UL}$ of an uplink periodic service, that is, $F_{total\ UL} = F_{UL}$.

S550: The network device performs resource scheduling on the terminal device based on a data packet arrival period (for example, a data packet arrival period $P_{UL}$ of an uplink periodic service of the terminal device and a data packet arrival period $P_{DL}$ of a downlink periodic service of the terminal device) and a data packet size.

In a possible implementation, for a terminal device shown in FIG. 6, different frequency bands and different systems share a baseband computing resource, and uplink and downlink have independent baseband computing resources; or different frequency bands, different systems, and uplink and downlink share a storage resource. The network device needs to meet the following constraint conditions for both uplink transmission and downlink transmission.

For example, a current scheduling slot is $S_0$, and one transmission period of the periodic service is P. It is recorded that $P = \max(P_{DL}, P_{UL})$ (when the terminal device separately reports $P_{DL}$ and $P_{UL}$) or P (when the terminal device reports only P), and it is recorded that, in a time window (that is, $[S_0 - P + 1, S_0]$) of P previous slots including a slot $S_0$, for all serving cells or cell groups (cell group), frequency bands, carriers, or one frequency band combination currently configured for the terminal device, a total quantity of bits that the network device schedules the terminal device to transmit on all PDSCHs is $TotalData_{DL}$. It is recorded that, in a time window (that is, $[S_0 - P + 1, S_0]$) of P previous slots including a slot $S_0$, for all serving cells or cell groups (cell group), frequency bands, carriers, or one frequency band combination currently configured for the terminal device, a total quantity of bits that the network device schedules the terminal device to transmit on all PUSCHs is $TotalData_{UL}$.

In another possible implementation, for a terminal device shown in FIG. 7, different frequency bands and different systems share a baseband computing resource, and uplink and downlink have independent baseband computing resources. In this case, in scheduling performed by the network device on the terminal device, downlink scheduling and uplink scheduling should meet different constraint conditions respectively; or different frequency bands and different systems share a storage resource, and uplink and downlink have independent storage resources. The network device separately meets different constraint conditions for uplink transmission and downlink transmission.

To enable scheduling performed by the network device on the terminal device conforms to a downlink layer 2 buffer storage capability of the terminal device, that is, not exceeding a baseband storage capability of the terminal device, it is assumed that a downlink layer 2 buffer size corresponding to downlink transmission of the terminal device should be $F_{totalDL}$. For example, when the terminal device receives scheduling signaling of a PDSCH, if $TotalData_{DL} < F_{totalDL}$, the terminal device does not process the PDSCH scheduling.

To enable uplink scheduling performed by the network device on the terminal device conforms to an uplink layer 2 buffer storage capability of the terminal device, that is, not exceeding a baseband storage capability of the terminal device, it is assumed that an uplink layer 2 buffer size corresponding to uplink transmission of the terminal device should be $F_{totalUL}$. For example, when the terminal device receives scheduling signaling of a PUSCH, if $TotalData_{UL} < F_{totalUL}$, the terminal device does not process the PUSCH scheduling.

It should be noted that $S_0$ in this implementation may also be an absolute time, or a time unit calculated relative to a reference parameter set (numerology).

Based on the foregoing embodiment, specific service transmission is used as an example for further description.

For example, the following embodiments of this application relate to a VR Cloud Gaming service, and a service feature of the VR Cloud Gaming is first briefly described.

For weak-interaction VR Cloud Gaming, the terminal device needs to download a high-definition video stream from a cloud in real time and upload assistance information such as a local action and positioning in real time. As described above, both uplink transmission and downlink transmission of the terminal device have features of periodicity, a high rate, a low delay, and a duty cycle less than 1. In addition, because an uplink service amount and a downlink service amount are asymmetric, an uplink service feature parameter and a downlink service feature parameter of the terminal device may be different. For example, a maximum uplink transmission rate that needs to be supported by the terminal device is 1 Mbps, and a maximum downlink transmission rate that needs to be supported by the terminal device is 100 Mbps.

For strong-interaction VR Cloud Gaming, while downloading a high-definition video stream from a cloud in real time, the terminal device needs to upload, in real time, high-definition video information obtained by a local camera. As described above, because the uplink service amount and the downlink service amount are symmetric, the uplink service feature parameter and the downlink service feature parameter of the terminal device may be the same. For example, a maximum uplink transmission rate that needs to be supported by the terminal device is 100 Mbps, and a maximum downlink transmission rate that needs to be supported by the terminal device is 100 Mbps, that is, service feature parameters are the same.

For example, a terminal device downloads a high-definition video for transmission. A processing procedure is as follows: first, a cloud performs processing such as calculation, rendering, and source encoding on a VR video frame to form transmission data; then, an IP packet generated by transmitting data through a core network is data transmitted over an air interface, and the data transmitted over an air interface is transmitted to a VR terminal device through an air interface network; and finally, the VR terminal device buffers, decodes, and displays the received data transmitted over an air interface.

Therefore, a VR downlink periodic service may be determined by one or more of the following parameters: a size $F$ bits of data transmitted over an air interface corresponding to a video packet; a video packet generation period $P$ ms; an air interface transmission delay $D$ ms of a video packet; and another delay $S$ ms caused in a process from generating to displaying a video packet other than air interface transmission, including cloud computing, rendering, encoding, buffering, decoding, displaying, and the like. The foregoing parameters meet the following relationship: $P = S + D$, where $D < P$ and $S < P$. A duty cycle of the VR service is $\alpha = D / P = D / (D + S)$, and $\alpha \in (0,1)$.

A procedure for processing a periodic VR uplink service is similar to that for processing a periodic VR downlink service.

In conclusion, in the foregoing embodiment, a new terminal device type in which a baseband capability is decoupled from a hardware capability is provided by using a time domain feature of an AR or VR service, so that the network device implements targeted resource scheduling for the terminal device based on the uplink and downlink layer 2 buffer size and the air interface transmission delay of a data packet, thereby better adapting to a specific service type while meeting a requirement of a VR Cloud Gaming service, minimizing uplink and downlink layer 2 buffer costs, and reducing implementation costs of the terminal device.

FIG. 8 is a schematic diagram of an example of a data transmission method applicable to this application. A hardware capability of a terminal device is decoupled from a baseband capability based on a feature of a terminal device on a service time domain. For example, the data transmission method is applicable to a terminal device type of a VR Cloud Gaming video call service, and both an uplink and a downlink of the terminal device type are VR services. Different from the foregoing method 500, the terminal device determines a data packet size based on a service feature and a hardware capability, so that the network device implements a scheduling constraint on the terminal device, and the hardware capability is enabled to match the baseband capability to a maximum extent. Specific implementation step 800 includes the following steps.

S810: The terminal device sends a service feature (that is, an example of first information) of the terminal device to a network device.

Correspondingly, the network device receives the service feature of the terminal device from the terminal device.

The service feature of the terminal device includes one or more of the following parameters: a data packet arrival period P, an air interface transmission delay of a data packet or a duty cycle $\alpha$, a core network delay of a data packet, and a local rendering delay or 1 - duty cycle $\delta$.

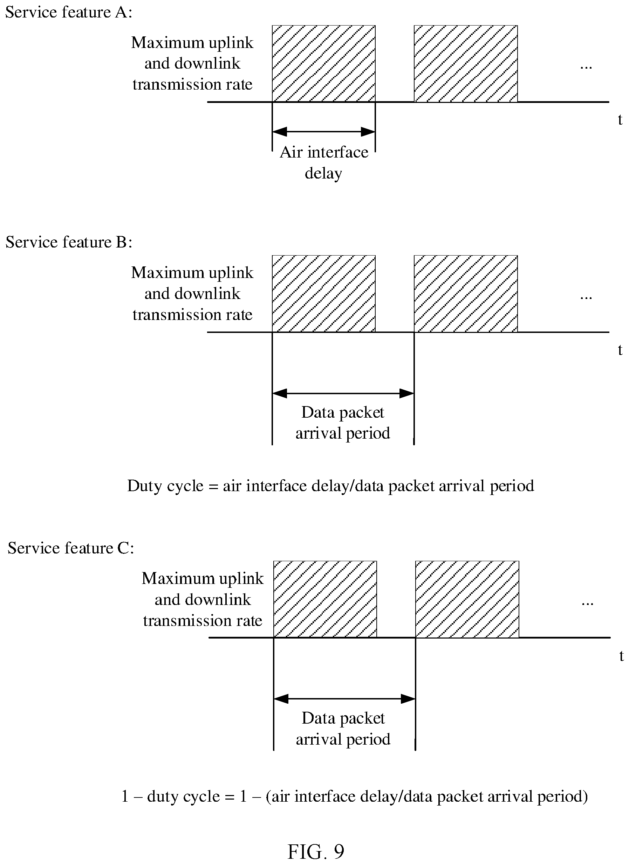

FIG. 9 shows three different service features: a service feature A is an air interface transmission delay of a data packet. A service feature B is a data packet arrival period, and an air interface transmission delay of a data packet or a duty cycle. For example, a value of the data packet arrival period may be 60 fps and 120 fps, and corresponding values of the air interface transmission delay of a data packet are 5 ms and 10 ms respectively, and a value range of the corresponding duty cycle is from 0 to 1. A service feature C is a data packet arrival period, a core network delay of a data packet, and a local rendering delay or 1 - duty cycle. For example, a value of the data packet arrival period may be 60 fps and 120 fps, and values of the core network delay of a data packet and the local rendering delay corresponding to 60 fps and 120 fps may be 5 ms and 10 ms.

In a possible implementation, the service feature of the terminal device includes: a service feature A, a service feature B, and a service feature C.

A weak-interaction VR Cloud Gaming service is used as an example. The terminal device reports the service feature A, the service feature B, and the service feature C in S810. Because the service feature A is the air interface transmission delay of a data packet in step S510, the reporting of the service feature A performed by the terminal device is consistent with that in step S510. For brevity, details are not described herein again. For the service feature B, the terminal device reports a data packet arrival period $P_{DL}$ and an air interface transmission delay $D_{DL}$ of a downlink data packet of a downlink periodic service of the terminal device, and a data packet arrival period $P_{UL}$ and an air interface transmission delay $D_{UL}$ of the uplink data packet of an uplink periodic service. Optionally, the terminal device reports a data packet arrival period $P_{UL}$ and an uplink periodic service duty cycle $\alpha_{UL} \in (0,1)$ of an uplink periodic service, and a data packet arrival period $P_{DL}$ and a downlink periodic service duty cycle $\alpha_{DL} \in (0,1)$ of a downlink periodic service. For the service feature C, the terminal device reports a data packet arrival period $P_{DL}$ of a downlink periodic service of the terminal device, a core network delay of a data packet, and a local rendering delay or 1 - duty cycle, and a data packet arrival period $P_{UL}$ of an uplink periodic service, a core network delay of a data packet, and a local rendering delay or 1 - duty cycle $\delta$.

Then, a strong-interaction VR Cloud Gaming service is used as an example. Because an uplink service and a downlink service are symmetric, the terminal device may report an air interface transmission delay of only one data packet for downlink transmission or uplink transmission. For the service feature A, the terminal device may report an air interface transmission delay of only one data packet, and a value of the air interface transmission delay may be used for uplink transmission or downlink transmission. Similarly, for the service feature B, the terminal device may report a data packet arrival period and an air interface transmission delay of a data packet or a duty cycle of only one periodic service. For the service feature C, the terminal device may report a data packet arrival period of only one periodic service, a core network delay of a data packet, and a local rendering delay or 1 - duty cycle.

S820: The terminal device sends hardware capability information of the terminal device (that is, an example of second information) to the network device.

Correspondingly, the network device receives the hardware capability information of the terminal device from the terminal device.

S830: The network device determines an uplink and downlink L2 buffer size based on a hardware capability of the terminal device and a service feature of the terminal device.

In this embodiment of this application, the hardware capability of the terminal device may be approximately considered as maximum transmission rates $R_{DL}$ and $R_{UL}$. The network device needs to determine a maximum uplink transmission rate and/or a maximum downlink transmission rate $R_{DL}$ and $R_{UL}$ based on the hardware capability of the terminal device. A specific calculation method is described above. For brevity, details are not described herein again.

The uplink and downlink layer 2 buffer size $F_{total}$ is calculated in the following manners.

In a possible implementation, for a terminal device shown in FIG. 6, different frequency bands and different systems share a baseband computing resource, and uplink and downlink have independent baseband computing resources; or different frequency bands, different systems, and uplink and downlink share a storage resource.

The network device may separately determine the uplink and downlink layer 2 buffer size $F_{total}$ based on the maximum transmission rate and the service features A, B, and C, for example, determining by using the following formula: that is,

$$F_{total} = R_{DL} * D_{DL} + R_{UL} * D_{UL};$$

$$F_{total} = R_{DL} * P_{DL} * \alpha_{DL} + R_{UL} * P_{UL} * \alpha_{UL};$$

or

$$F_{total} = AvgDLDateRate * P_{DL} + AvgULDateRate * P_{UL},$$

where
$AvgDLDateRate = R_{DL} * \alpha_{DL}$, $AvgULDateRate = R_{UL} * \alpha_{UL}$, $AvgDLDateRate$ is an average downlink transmission rate, and $AvgULDateRate$ is an average maximum uplink transmission rate.

$$F_{total} = R_{DL} * P_{DL} * (1 - \delta_{DL}) + R_{UL} * P_{UL} * (1 - \delta_{UL});$$

or

$$F_{total} = AvgDLDateRate * P_{DL} + AvgULDateRate * P_{UL},$$

where

$$AvgDLDateRate = R_{DL} * (1 - \delta_{DL}), \text{ and } AvgULDateRate = R_{UL} * (1 - \delta_{UL}).$$

*AvgDLDateRate* is the average downlink transmission rate, and *AvgULDateRate* is the average maximum uplink transmission rate.

Further, $R_{DL}$ is related to a maximum hardware capability of the terminal device, and $R_{UL}$ is similar to $R_{DL}$.

In another possible implementation, for a terminal device shown in FIG. 7, different frequency bands and different systems share a baseband computing resource, and uplink and downlink have independent baseband computing resources. In this case, in scheduling performed by the network device on the terminal device, downlink scheduling and uplink scheduling should meet different constraint conditions respectively; or different frequency bands and different systems share a storage resource, and uplink and downlink have independent storage resources.

For example, the network device separately determines an uplink layer 2 buffer size $F_{totalDL}$ and an uplink layer 2 buffer size $F_{totalUL}$ based on the maximum transmission rate and the service features A, B, and C. An uplink layer 2 buffer size $F_{total\ DL}$ corresponding to downlink transmission of the terminal device is determined based on a maximum transmission rate $R_{DL}$ required by the downlink periodic service and a downlink air interface transmission delay $D_{DL}$, that is, $F_{total\ DL} = R_{DL} * D_{DL}$; and an uplink layer 2 buffer size $F_{total\ UL}$ corresponding to uplink transmission of the terminal device is determined based on a maximum transmission rate $R_{UL}$ required by the uplink periodic service and an uplink air interface transmission delay $D_{UL}$, that is, $F_{total\ UL} = R_{UL} * D_{UL}$; or

a downlink layer 2 buffer size $F_{total\ DL}$ corresponding to downlink transmission of the terminal device is determined based on a maximum transmission rate $R_{DL}$ required by the downlink periodic service, a data packet arrival period $P_{DL}$ of a downlink periodic service, and a downlink periodic service duty cycle $\alpha_{DL} = D_{DL} / P_{DL}$, that is, $F_{total\ DL} = R_{DL} * P_{DL} * \alpha_{DL}$; and an uplink layer 2 buffer size $F_{total\ UL}$ corresponding to uplink transmission of the terminal device is determined based on a maximum transmission rate $R_{UL}$ required by the uplink periodic service, a data packet arrival period $P_{UL}$ of an uplink periodic service, and an uplink periodic service duty cycle $\alpha_{UL} = D_{UL} / P_{UL}$, that is, $F_{total\ UL} = R_{UL} * P_{UL} * \alpha_{UL}$; or

a downlink layer 2 buffer size $F_{total\ DL}$ corresponding to downlink transmission of the terminal device is determined based on a maximum transmission rate $R_{DL}$ required by the downlink periodic service, a data packet arrival period $P_{DL}$ of a downlink periodic service, a core network delay of a data packet, and a local rendering delay or 1 - duty cycle $\delta_{DL}$, that is, $F_{total\ DL} = R_{DL} * P_{DL} * (1 - \delta_{DL})$; and an uplink layer 2 buffer size $F_{total\ UL}$ corresponding to uplink transmission of the terminal device is determined based on a maximum transmission rate *MaxULDateRate* required by the uplink periodic service, a data packet arrival period $P_{UL}$ of an uplink periodic service, a core network delay of a data packet, and a local rendering delay or 1 - duty cycle $\delta_{DL}$, that is, $F_{total\ UL} = R_{UL} * P_{UL} * (1 - \delta_{UL})$.

Further, $R_{DL}$ is related to a hardware capability of the terminal device, and $R_{UL}$ is similar to $R_{DL}$.

S840: The network device performs resource scheduling on the terminal device based on the uplink and downlink L2 buffer size.

For a specific implementation, refer to step S550 in the method 500. For brevity, details are not described herein again.

In conclusion, in the foregoing embodiment, a new terminal device type in which a baseband capability is decoupled from a hardware capability is provided by using a time domain feature of an AR or VR service. The uplink and downlink layer 2 buffer size is determined based on the hardware capability and the service feature of the terminal device, so that the network device implements targeted resource scheduling for the terminal device. In addition to meeting a VR Cloud Gaming service requirement, an RF hardware capability of the terminal device is enabled to match the baseband capability to a maximum extent, so that a chip enables a service of the terminal device to have specific scalability, thereby reducing implementation costs of the terminal device.

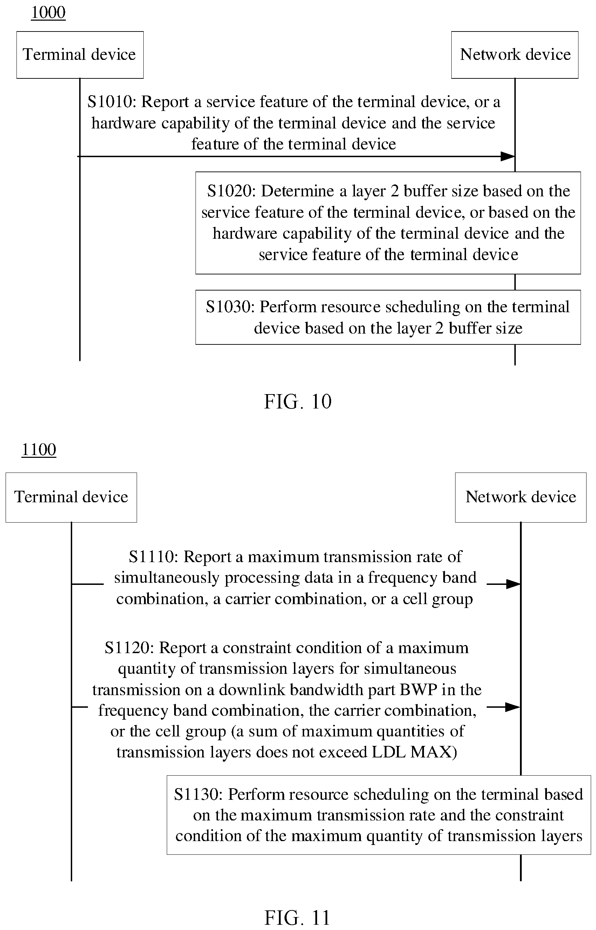

FIG. 10 is a schematic diagram of another example of a data transmission method applicable to this application. A hardware capability of a terminal device is decoupled from a baseband capability based on a feature of the terminal device on a service time domain. For a communications method of the terminal device in an NR independent networking scenario and an MR-DC or NR-DC scenario, a specific implementation step 1000 includes the following steps.

S 10 10: The terminal device sends a service feature of the terminal device to a network device, or sends a hardware capability (that is, an example of second information) of the terminal device and the service feature of the terminal device (that is, an example of first information).

Correspondingly, the network device receives the service feature from the terminal device, or receives the hardware capability of the terminal device and the service feature of the terminal device.

For common cloud gaming (Cloud Gaming):

in a possible implementation, the service feature of the terminal device includes the following plurality of parameters: a data packet size $F_{DL}$ of a downlink periodic service, an uplink air interface transmission delay $D_{UL}$, a data packet arrival period $P_{DL}$ of a downlink periodic service, a downlink air interface transmission delay $D_{DL}$, a maximum required uplink transmission rate $R_{UL}$, or a maximum transmission rate $R'_{UL}$ that can be supported in the uplink. $F_{DL}$ is measured in bits, $D_{UL}$ and $D_{DL}$ are measured in slots, and $R_{UL}$ is measured in Mbps.

For example, the terminal device reports a data packet size $F_{DL}$ corresponding to the downlink periodic service of the terminal device, a data packet arrival period $P_{DL}$ of a downlink periodic service, a downlink air interface transmission delay $D_{DL}$, and an uplink air interface transmission delay $D_{UL}$. A specific implementation method is the same as step S510 and step S520 in the foregoing method 500. The terminal device reports a maximum uplink transmission rate $R_{UL}$ of uplink transmission of the terminal device, for example, the maximum uplink transmission rate is measured in Mbps. Alternatively, the network device determines the maximum uplink transmission rate $R_{UL}$ based on another capability parameter of the terminal device, for example, a hardware capability of the terminal device. A maximum transmission rate $R'_{UL}$ supported in uplink transmission may be determined based on another capability reported by the terminal device.

In another possible implementation, the service feature of the terminal device includes the following plurality of parameters: a data packet arrival period $P_{DL}$ of a downlink periodic service, a downlink periodic service duty cycle $\alpha_{DL} = D_{DL} / P_{DL}$, a maximum transmission rate $R_{UL}$ required in the uplink or a maximum transmission rate $R'_{UL}$ supported in the uplink, an uplink air interface transmission delay $D_{UL}$, and a downlink air interface transmission delay $D_{DL}$. In other words, the baseband computing capability and the baseband storage capability of the terminal device are related to the foregoing parameters.

For example, a specific implementation method for the terminal device to report a data packet arrival period $P_{DL}$ of a downlink periodic service of the terminal device, a downlink periodic service duty cycle $\alpha_{DL} = D_{DL} / P_{DL}$, an uplink air interface transmission delay $D_{UL}$, and a downlink air interface transmission delay $D_{DL}$ is the same as step S810 in the foregoing method 800. The terminal device reports a maximum uplink transmission rate $R_{UL}$ of uplink transmission of the terminal device, for example, the maximum uplink transmission rate is measured in Mbps. Alternatively, the network device determines a maximum uplink transmission rate $R_{UL}$ based on another capability parameter of the terminal device, for example, a hardware capability of the terminal device. A maximum transmission rate $R'_{UL}$ supported in uplink transmission may be determined based on another capability reported by the terminal device.

Immersive AR gaming: in a possible implementation, the service feature of the terminal device includes the following plurality of parameters: a data packet size $F_{UL}$ of an uplink periodic service, an uplink air interface transmission delay $D_{UL}$, a data packet arrival period $P_{UL}$ of an uplink periodic service, a downlink air interface transmission delay $D_{DL}$, and a maximum transmission rate $R_{DL}$ required in the downlink or a maximum transmission rate $R'_{DL}$ that can be supported in downlink. $F_{UL}$ is measured in bits, $D_{UL}$ and $D_{DL}$ are measured in slots, and $R_{DL}$ is measured in Mbps.

For example, the terminal device reports a data packet size $F_{UL}$ corresponding to the uplink periodic service of the terminal device, a downlink air interface transmission delay $D_{DL}$, a data packet arrival period $P_{UL}$ of an uplink periodic service, and an uplink air interface transmission delay $D_{UL}$. A specific implementation method is the same as step S510 and step S520 in the foregoing method 500. The terminal device reports a maximum transmission rate $R_{DL}$ of uplink transmission of the terminal device, for example, the maximum transmission rate is measured in Mbps. Alternatively, the network device determines a maximum transmission rate $R_{DL}$ based on another capability parameter of the terminal device, for example, a hardware capability of the terminal device. A maximum transmission rate $R'_{DL}$ supported in uplink transmission may be determined based on another capability reported by the terminal device. For a specific calculation method, refer to the foregoing related definitions.

In another possible implementation, the service feature of the terminal device includes the following plurality of parameters: a data packet arrival period $P_{UL}$ of an uplink periodic service, an uplink periodic service duty cycle $\alpha_{UL} = D_{UL} / P_{UL}$, a maximum transmission rate $R_{DL}$ required in the downlink or a maximum transmission rate $R'_{DL}$ supported in downlink, an uplink air interface transmission delay $D_{UL}$, and a downlink air interface transmission delay $D_{DL}$. In other words, the baseband computing capability and the baseband storage capability of the terminal device are related to the foregoing parameters.

For example, a specific implementation method for the terminal device to report a data packet arrival period $P_{UL}$ of an uplink periodic service of the terminal device, an uplink periodic service duty cycle $\alpha_{UL} = D_{UL} / P_{UL}$, an uplink air interface transmission delay $D_{UL}$, and a downlink air interface transmission delay $D_{DL}$ is the same as step S810 in the foregoing method 800. The terminal device reports a maximum transmission rate $R_{DL}$ of downlink transmission of the terminal device, for example, the maximum transmission rate is measured in Mbps. Alternatively, the network device determines a maximum uplink transmission rate $R_{UL}$ based on another capability parameter of the terminal device, for example, a hardware capability of the terminal device. A maximum transmission rate $R'_{DL}$ supported in downlink transmission may be determined based on another capability reported by the terminal device.

S1020: The network device determines an uplink and downlink L2 buffer size based on a service feature of the terminal device, or based on a hardware capability of the terminal device and a service feature of the terminal device.

For common cloud gaming (Cloud Gaming):
the uplink and downlink layer 2 buffer size $F_{total}$ is calculated in the following manners.

In a possible implementation, for a terminal device shown in FIG. 6, different frequency bands and different systems share a baseband computing resource, and uplink and downlink have independent baseband computing resources; or different frequency bands, different systems, and uplink and downlink share a storage resource.

For example, the network device determines the uplink and downlink layer 2 buffer size $F_{total}$ based on the service feature of the terminal device, that is, $F_{total}$ is determined based on a data packet size $F_{DL}$ of a downlink periodic service, a maximum transmission rate $R_{UL}$ required in the uplink or a maximum transmission rate $R'_{UL}$ that can be supported in the uplink, and an uplink air interface transmission delay $D_{UL}$, that is, $F_{total} = F_{DL} + R_{UL} * D_{UL}$ or

$$F_{total} = F_{DL} + R'_{UL} * D_{UL}.$$

For example, the network device determines the uplink and downlink layer 2 buffer size $F_{total}$ based on the hardware capability of the terminal device and the service feature of the terminal device, that is, $F_{total}$ is determined based on a maximum transmission rate $R_{DL}$ required by a downlink periodic service, a downlink air interface transmission delay $D_{DL}$, a maximum transmission rate $R_{UL}$ required in the uplink or a maximum transmission rate $R'_{UL}$ that can be supported in the uplink, and an uplink air interface transmission delay $D_{UL}$, that is, $F_{total} = R_{DL} * D_{DL} + R_{UL} * D_{UL}$ or

$$F_{total} = R_{DL} * D_{DL} + R'_{UL} * D_{UL}.$$ Alternatively, $F_{total}$ is determined based on a maximum transmission rate $R_{DL}$ supported by the terminal device in the downlink, a maximum transmission rate $R_{UL}$ supported in the uplink, a data packet arrival period $P_{DL}$ of a downlink periodic service, a downlink periodic service duty cycle $\alpha_{DL} = D_{DL} / P_{DL}$, a maximum transmission rate $R_{UL}$ required in the uplink or a maximum transmission rate $R'_{UL}$ that can be supported in the uplink, and an uplink air interface transmission delay $D_{UL}$, that is, $F_{total} = R_{DL} * P_{DL} * \alpha_{DL} + R_{UL} * P_{UL} * \alpha_{UL}$ or

$$F_{total} = R_{DL} * P_{DL} * \alpha_{DL} + R'_{UL} * P_{UL} * \alpha_{UL}.$$

Further, $R_{DL}$ is related to the hardware capability of the terminal device, and $R_{UL}$ is similar to $R_{DL}$. For a specific calculation method, refer to the foregoing related definitions.

In another possible implementation, for a terminal device shown in FIG. 7, different frequency bands and different systems share a baseband computing resource, and uplink and downlink have independent baseband computing resources. In this case, in scheduling performed by the network device on the terminal device, downlink scheduling and uplink scheduling should meet different constraint conditions respectively; or different frequency bands and different systems share a storage resource, and uplink and downlink have independent storage resources.

For example, the network device determines a downlink layer 2 buffer size $F_{total\ DL}$ based on the service feature of the terminal device, which is the same as another possible implementation of step S550 in the method 500. For brevity, details are not described herein again.

For example, the network device determines the downlink layer 2 buffer size $F_{total\ DL}$ based on the hardware capability of the terminal device and the service feature of the terminal device, which is the same as another possible implementation of step S830 in the method 800, that is, $F_{total\ DL} = R_{DL} * D_{DL}$, $F_{total\ DL} = R_{DL} * P_{DL} * \alpha_{DL}$, or $F_{total\ DL} = R_{DL} * P_{DL} * (1 - \delta_{DL})$. For brevity, details are not described herein again.

For example, the network device determines an uplink layer 2 buffer size $F_{total\,UL}$ based on the service feature of the terminal device, or the hardware capability of the terminal device and the service feature of the terminal device, that is, $F_{total\,UL}$ is determined based on a maximum transmission rate $R_{UL}$ required in the uplink or a maximum transmission rate $R'_{UL}$ that can be supported in the uplink, and an uplink air interface transmission delay $D_{UL}$, that is, $F_{total\,UL} = R_{UL} * D_{UL}$ or $F_{total\,UL} = R'_{UL} * D_{UL}$.

For immersive AR gaming:

the uplink and downlink layer 2 buffer size $F_{total}$ is calculated in the following manners.

In a possible implementation, for a terminal device shown in FIG. 6, different frequency bands and different systems share a baseband computing resource, and uplink and downlink have independent baseband computing resources; or different frequency bands, different systems, and uplink and downlink share a storage resource.

For example, the network device determines the uplink and downlink layer 2 buffer size $F_{total}$ based on the service feature of the terminal device, that is, $F_{total}$ is determined based on a data packet size $F_{UL}$ of an uplink periodic service, a maximum transmission rate $R_{DL}$ required in the downlink or a maximum transmission rate $R'_{DL}$ that can be supported in the downlink, and a downlink air interface transmission delay $D_{DL}$, that is, $F_{total} = F_{UL} + R_{DL} * D_{DL}$ or

$$F_{total} = F_{UL} + R'_{DL} * D_{DL}.$$

For example, the network device determines the uplink and downlink layer 2 buffer size $F_{total}$ based on the hardware capability of the terminal device and the service feature of the terminal device, that is, $F_{total}$ is determined based on a maximum transmission rate $R_{UL}$ required by an uplink periodic service, an uplink air interface transmission delay $D_{UL}$, a maximum transmission rate $R_{DL}$ required in the downlink or a maximum transmission rate $R'_{DL}$ that can be supported in the downlink, and a downlink air interface transmission delay $D_{DL}$, that is, $F_{total} = R_{UL} * D_{UL} + R_{DL} * D_{DL}$

or $F_{total} = R_{UL} * D_{UL} + R'_{DL} * D_{DL}$; or

$F_{total}$ is determined based on a maximum transmission rate $R_{UL}$ supported by the terminal device in the uplink, a maximum transmission rate $R_{DL}$ supported by the terminal device in the downlink, a data packet arrival period $P_{UL}$ of an uplink periodic service, an uplink periodic service duty cycle $\alpha_{UL} = D_{UL} / P_{UL}$, a maximum transmission rate $R_{DL}$ required in the downlink or a maximum transmission rate $R'_{DL}$ that can be supported in the downlink, and an uplink air interface transmission delay $D_{UL}$, that is, $F_{total} = R_{UL} * P_{UL} * \alpha_{UL} + R_{DL} * P_{DL} * \alpha_{DL}$ or

$F_{total} = R_{UL} * P_{UL} * \alpha_{UL} + R'_{DL} * P_{DL} * \alpha_{DL}$.

Further, $R_{UL}$ is related to a hardware capability of the terminal device. For a specific calculation method, refer to the foregoing related definitions.

In another possible implementation, for a terminal device shown in FIG. 7, different frequency bands and different systems share a baseband computing resource, and uplink and downlink have independent baseband computing resources. In this case, in scheduling performed by the network device on the terminal device, downlink scheduling and uplink scheduling should meet different constraint conditions respectively; or different frequency bands and different systems share a storage resource, and uplink and downlink have independent storage resources.

For example, the network device determines an uplink layer 2 buffer size $F_{total\,UL}$ based on the service feature of the terminal device, which is the same as another possible implementation of step S550 in the method 500. For brevity, details are not described herein again.

For example, the network device determines the uplink layer 2 buffer size $F_{total\,UL}$ based on the hardware capability of the terminal device and the service feature of the terminal device, which is the same as another possible implementation of step S830 in the method 800, that is, $F_{total\,UL} = R_{UL} * D_{UL}$, $F_{total\,UL} = R_{UL} * P_{UL} * \alpha_{UL}$, or $F_{total\,UL} = R_{UL} * P_{UL} * (1-\delta_{UL})$. For brevity, details are not described herein again.

For example, the network device determines a downlink layer 2 buffer size $F_{total\,DL}$ based on the service feature of the terminal device, or the hardware capability of the terminal device and the service feature of the terminal device, that is, $F_{total\,DL}$ is determined based on a maximum transmission rate $R_{DL}$ required in the downlink or a maximum transmission rate $R'_{DL}$ that can be supported in the downlink, and a downlink air interface transmission delay $D_{DL}$, that is, $F_{total\,DL} = R_{DL} * D_{DL}$ or $F_{total\,DL} = R_{DL} * D_{DL}$.

S1030: The network device performs resource scheduling on the terminal device based on the uplink and downlink L2 buffer size.

For a specific implementation, refer to step S550 in the method 500. For brevity, details are not described herein again.

In conclusion, in the foregoing embodiment, a new terminal device type in which a baseband capability is decoupled from a hardware capability is provided by using a time domain feature of an AR or VR service, so that the network device implements targeted scheduling on the terminal device. In a case that a service requirement of the common cloud gaming (Cloud Gaming) or a service requirement of the immersive AR gaming is met, an XR chip is customized based on an uplink and downlink service feature, thereby reducing implementation costs of the terminal device.

Based on the foregoing embodiment, specific service transmission is used as an example for further description.

For example, the following embodiment of this application relates to the common Cloud Gaming and the immersive AR gaming. Service features of the common Cloud Gaming and the immersive AR gaming are first briefly described.

For the common Cloud Gaming, the terminal device needs to download a high-definition video stream from a cloud in real time, and the terminal device only needs to upload local assistance information occasionally. Therefore, as described above, all downlink transmission of the terminal device is characterized by a periodicity, a high rate, a low delay, and a duty cycle less than 1. In addition, uplink transmission of the terminal device is for an eMBB service, characterized by a relatively low rate, a high delay, and a duty cycle basically equal to 1.

Therefore, a method for describing downlink transmission of the terminal device, which is a VR periodic service feature, is similar to the foregoing methods 500 and 800. Uplink transmission of the terminal device is for an eMBB service, and a required maximum uplink transmission rate is $R_{UL}$.

For the immersive AR gaming, the terminal device needs to upload, in real time, high-definition video information obtained by a local camera, and the terminal device may receive some augmented reality data streams. Therefore, as described above, uplink transmission of the terminal device is characterized by a periodicity, a high rate, a low delay, and a duty cycle less than 1. In addition, downlink transmission of the terminal device is for an eMBB service, characterized by a relatively low rate, a high delay, and a duty cycle basically equal to 1.

Therefore, a method for describing uplink transmission of the terminal device, which is a VR periodic service feature, is similar to the foregoing methods 500 and 800. Downlink transmission of the terminal device is for an eMBB service, and a required maximum downlink transmission rate is $R_{DL}$.

Currently, a maximum transmission rate of the terminal device in a unit time (for example, 1 ms), or a data processing capability of the terminal device in a unit time matches a hardware capability of the terminal device. For example, a terminal device that supports downlink CA supports parallel receiving on a frequency band 1, a frequency band 2, and a frequency band 3. In this case, the maximum downlink transmission rate of the terminal device is that the terminal device simultaneously receives data on three frequency bands, that is, a radio frequency capability of the terminal device supports the frequency band 1, the frequency band 2, and the frequency band 3. For example, maximum transmission rates that can be supported by the terminal device on the frequency band 1, the frequency band 2, and the frequency band 3 are respectively 100 Mbps, 100 Mbps, and 200 Mbps. In this case, the maximum transmission rate of the terminal device is 400 Mbps.

However, in some cases, a service of the terminal device does not need such a large maximum transmission rate, but needs to access more frequency bands simultaneously, so that spectrum resources are more flexibly used. For example, for some XR terminal devices, a maximum downlink transmission rate requirement is 100 Mbps. However, to enable the network device to quickly schedule the terminal device on a plurality of frequency bands, the terminal device may need to simultaneously access the frequency band 1, the frequency band 2, and the frequency band 3, for example, a Sub6G frequency band (a spectrum resource greater than 200 MHz) and an mmWave frequency band (a spectrum resource greater than 800 MHz). The network device may perform more dynamic and flexible scheduling on a user, and the terminal device may obtain a frequency selective gain and a better experience rate. To enable the terminal device to simultaneously access the frequency band 1, the frequency band 2, and the frequency band 3, the terminal device needs to simultaneously maintain synchronization information and channel statuses of all frequency bands. In other words, the radio frequency capability of the terminal device needs to support the frequency band 1, the frequency band 2, and the frequency band 3, and the terminal device can simultaneously perform receiving on the frequency band 1, the frequency band 2, and the frequency band 3. However, a baseband capability (a maximum downlink transmission rate of 100 Mbps) required by the terminal device is less than 400 Mbps. In addition, a receive radio frequency channel corresponding to each frequency band may be quickly switched between different frequency bands. For example, when the terminal device performs transmission on the frequency band 1, radio frequency receive channels of the terminal device on the frequency band 2 and the frequency band 3 may be dynamically switched to the radio frequency 1. This increases a quantity of receive antennas on the frequency band 1, and increases a downlink receive diversity gain of the terminal device.

Therefore, in this embodiment, the hardware capability and the baseband capability of the terminal device are decoupled by using a feature of the terminal device in a service frequency domain, that is, a plurality of frequency bands share the baseband processing capability and the hardware capability. Therefore, compared with an existing downlink CA technology, baseband costs of the terminal are reduced, and usage efficiency of the baseband processing capability and the hardware capability is improved.

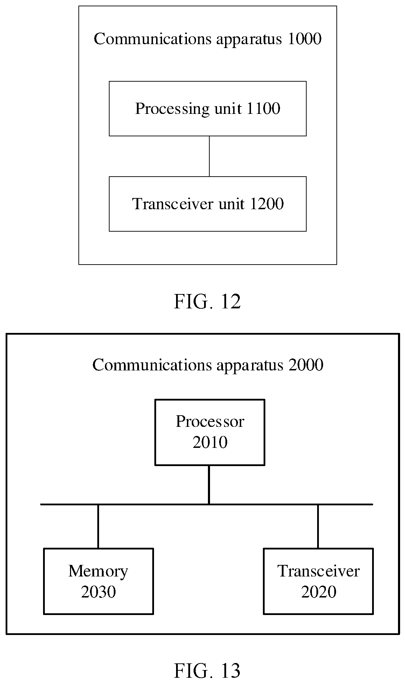

FIG. 12 is a schematic diagram of still another example of a data transmission method applicable to this application. Downlink transmission is used as an example, and a specific implementation step 1200 includes the following steps.

S1210: A terminal device sends, to a network device, a maximum transmission rate $DateRate_{DLMAX}$ at which the terminal device simultaneously processes data in a frequency band combination, a carrier combination, all configured serving cells, or all configured serving cell groups.

Correspondingly, the network device receives, from the terminal device, the maximum transmission rate at which the terminal device simultaneously processes data in the frequency band combination, the carrier combination, all the configured serving cells, or all the configured serving cell groups.

In a possible implementation, a frequency band combination or a carrier combination used by the terminal device for data sending, or all serving cells or all serving cell groups simultaneously configured for the terminal device may be marked as $A \in \{a_1, a_2, ..., a_k\}$, and the terminal device may simultaneously perform transmission on K BWPs in the frequency band combination, the carrier combination, all configured serving cells, or all configured serving cell groups, where K is an integer greater than or equal to 1.

For example, the terminal device reports that a maximum transmission rate at which the terminal device can simultaneously perform processing in the frequency band combination, the carrier combination, or all the configured serving cells is $DateRate_{DLMAX}$.

In another possible implementation, for a frequency band combination, a carrier combination, or all serving cells simultaneously configured for the terminal device that are reported by the terminal device, for example, $A \in \{a_1, a_2, ..., a_k\}$, the terminal device may simultaneously activate a maximum of M frequency bands, carriers, or serving cells in the frequency band combination, the carrier combination, or all the configured serving cell groups.

For example, the terminal device reports that a maximum transmission rate at which the terminal device can simultaneously perform processing in all activated frequency bands, carriers, or all configured serving cells is $DateRate_{DLMAX}$.

In still another possible implementation, for a frequency band combination, a carrier combination, or all serving cell groups simultaneously configured for the terminal device that are reported by the terminal device, for example, $A \in \{a_1, a_2, ..., a_k\}$, the terminal device may simultaneously activate a maximum of M frequency bands, carriers, or serving cells in the frequency band combination, the carrier combination, or all the configured serving cells, and the M frequency bands, carriers, or all configured serving cell groups correspond to M activated downlink BWPs.

For example, the terminal device reports that a maximum transmission rate at which the terminal device can simultaneously perform processing on the M activated downlink BWPs is

$$DateRate_{DLMAX}$$

S1220: The terminal device sends, to the network device, a constraint condition of a maximum quantity of transmission layers for performing simultaneous transmission, on all downlink BWPs, by the terminal device in the frequency band combination, the carrier combination, the serving cell, or the serving cell group.

Correspondingly, the network device receives, from the terminal device, the constraint condition of the maximum quantity of transmission layers for performing simultaneous transmission, on all the downlink BWPs, by the terminal device in the frequency band combination, the carrier combination, the serving cell, or the serving cell group.

The constraint condition is that a sum of maximum quantities of transmission layers for performing simultaneous transmission, on all the downlink BWPs, by the terminal device in the frequency band combination, the carrier combination, the serving cell, or the serving cell group cannot exceed $L_{DLMAX}$.

In a possible implementation, for a frequency band combination, a carrier combination, or serving cells or serving cell groups simultaneously configured for the terminal device that are reported by the terminal device, for example, $A \in \{a_1, a_2, ..., a_k\}$, the terminal device may simultaneously perform transmission on K BWPs in the frequency band combination, the carrier combination, the serving cell, or the serving cell group, where K is an integer greater than or equal to 1.

For example, the terminal device reports that a sum of maximum quantities of transmission layers for performing simultaneous transmission, on all downlink BWPs, by the terminal device in the frequency band combination, the carrier combination, or the serving cell group cannot exceed $L_{DLMAX}$.

In another possible implementation, for a frequency band combination, a carrier combination, or serving cell groups simultaneously configured for the terminal device that are reported by the terminal device, for example, $A \in \{a_1, a_2, ..., a_k\}$, the terminal device may simultaneously activate a maximum of M frequency bands, carriers, or serving cells in the frequency band combination, the carrier combination, or the serving cell group.

For example, the terminal device reports that a sum of maximum quantities of transmission layers for performing simultaneous transmission, on all downlink BWPs, by the terminal device in all activated frequency bands, carriers, or serving cells cannot exceed $L_{DLMAX}$.

In still another possible implementation, for a frequency band combination, a carrier combination, or serving cell groups simultaneously configured for the terminal device that are reported by the terminal device, for example, $A \in \{a_1, a_2, ..., a_k\}$, the terminal device may simultaneously activate a maximum of M frequency bands, carriers, or serving cells in the frequency band combination, the carrier combination, or the serving cell group, and the M frequency bands, carriers, or serving cells correspond to M activated downlink BWPs.

For example, the terminal device reports that a sum of maximum quantities of transmission layers on all activated downlink BWPs cannot exceed $L_{DLMAX}$.

S 1230: The network device performs resource scheduling on the terminal device based on the maximum transmission rate and the constraint condition of the maximum quantity of transmission layers.

In a possible implementation, for a frequency band combination, a carrier combination, or serving cell groups simultaneously configured for the terminal device that are reported by the terminal device, for example, $A \in \{a_1, a_2, ..., a_k\}$, the terminal device may simultaneously perform transmission on K BWPs in the frequency band combination, the carrier combination, or the serving cell group, where K is an integer greater than or equal to 1.

For example, based on a baseband computing capability of the terminal device, scheduling performed by the network device on the terminal device needs to meet a constraint condition:

$$\sum_{j=0}^{J-1} \frac{\sum_{m=0}^{M-1} V_{j,m}}{T_{slot}^{\mu(j)}} \leq DateRate_{DLMAX} \tag{6}$$

For example, if each BWP uses an independent receive radio frequency channel, the terminal device has J downlink BWPs for simultaneous transmission, and a quantity of transmission layers of each BWP is $L_j$, scheduling performed by the network device on the terminal device needs to meet the following condition:

$$\sum_{j=0}^{J-1} L_j \leq L_{DLMAX} \tag{7}$$

For example, if two BWPs in a plurality of BWPs use a same receive radio frequency channel, $L_s = L_t$, the terminal device has J downlink BWPs for simultaneous transmission, and a quantity of transmission layers of each BWP is $L_j$, scheduling performed by the network device on the terminal device needs to meet the following condition:

$$\sum_{j=0, j \neq s,t}^{J-1} L_j + L_s \leq L_{DLMAX} \tag{8}$$

In another possible implementation, for a frequency band combination, a carrier combination, or serving cell or serving cell groups simultaneously configured for the terminal device that are reported by the terminal device, for example, $A \in \{a_1, a_2, ..., a_k\}$, the terminal device may simultaneously activate a maximum of M frequency bands, carriers, serving cells, or serving cell groups in the frequency band combination, the carrier combination, the serving cell, or the serving cell group.

For example, based on a baseband computing capability of the terminal device, scheduling performed by the network device on the terminal device needs to meet a constraint condition:

$$\sum_{j=0}^{J-1} \frac{\sum_{m=0}^{M-1} V_{j,m}}{T_{slot}^{\mu(j)}} \leq DateRate_{DLMAX} \tag{6}$$

For example, if each BWP uses an independent receive radio frequency channel, the terminal device has J downlink BWPs for simultaneous transmission, J is less than or equal to M, and a quantity of transmission layers of each

BWP is $L_j$, scheduling performed by the network device on the terminal device needs to meet the following condition:

$$\sum_{j=0}^{J-1} L_j \leq L_{DL\,MAX} \tag{7}$$

For example, if two BWPs in a plurality of BWPs use a same receive radio frequency channel, $L_s = L_t$, the terminal device has J downlink BWPs for simultaneous transmission, and a quantity of transmission layers of each BWP is $L_j$, scheduling performed by the network device on the terminal device needs to meet the following condition:

$$\sum_{j=0, j \neq s,t}^{J-1} L_j + L_s \leq L_{DL\,MAX} \tag{8}$$

In still another possible implementation, for a frequency band combination, a carrier combination, or serving cells or serving cell groups simultaneously configured for the terminal device that are reported by the terminal device, for example, $A \in \{a_1, a_2, ..., a_k\}$, the terminal device may simultaneously activate a maximum of M frequency bands, carriers, serving cells, or serving cell groups in the frequency band combination, the carrier combination, the serving cell, or the serving cell group, and the M frequency bands, carriers, serving cells, or serving cell groups correspond to M activated downlink BWPs.

For example, based on a baseband computing capability of the terminal device, scheduling performed by the network device on the terminal device needs to meet a constraint condition:

$$\sum_{j=0}^{J-1} \frac{\sum_{m=0}^{M-1} V_{j,m}}{T_{slot}^{\mu(j)}} \leq DateRate_{DL\,MAX} \tag{6}$$

For example, if each BWP uses an independent receive radio frequency channel, and a quantity of transmission layers of each BWP is $L_j$, scheduling performed by the network device on the terminal device needs to meet the following condition:

$$\sum_{j=0}^{M-1} L_j \leq L_{DL\,MAX} \tag{7}$$

For example, if two BWPs in a plurality of BWPs use a same receive radio frequency channel, $L_s = L_t$, and a quantity of transmission layers of each BWP is $L_j$, scheduling performed by the network device on the terminal device needs to meet the following condition:

$$\sum_{j=0, j \neq s,t}^{M-1} L_j + L_s \leq L_{DL\,MAX} \tag{8}$$

It should be understood that the method is also applicable to uplink transmission, and a specific implementation is similar to that of downlink transmission. In addition, meanings of parameters in the formula (6) to the formula (8) are consistent with meanings of parameters in the formula (1) to the formula (5). For brevity, details are not described herein again.

In conclusion, in the foregoing embodiment, a new terminal type in which a baseband is decoupled from a radio frequency is provided by using a frequency domain feature of a service, thereby reducing baseband costs of the terminal, and improving usage efficiency of a baseband processing capability and a hardware capability.

The foregoing describes in detail the communications method side embodiments provided in embodiments of this application with reference to FIG. 4 to FIG. 11. The following describes in detail apparatus side embodiments of this application with reference to FIG. 12 to FIG. 15. It should be understood that the descriptions of the method embodiments correspond to descriptions of the apparatus embodiments. Therefore, for parts that are not described in detail, refer to the descriptions in the foregoing method embodiments.

The foregoing mainly describes the solutions provided in the embodiments of this application from a perspective of interaction among network elements. It may be understood that, to implement the foregoing functions, each network element such as a transmitting end device or a receiving end device includes a corresponding hardware structure and/or software module for performing each function. A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solution. A person skilled in the art may use different methods to implement the described functions for each particular application, but it should not be considered that the implementation goes beyond the scope of this application.

In embodiments of this application, function module division may be performed on the transmitting end device or the receiving end device based on the foregoing method example. For example, each function module may be obtained through division corresponding to each function, or two or more functions may be integrated in one processing module. The integrated module may be implemented in a form of hardware, or may be implemented in a form of a software function module. It should be noted that, in embodiments of this application, division into the modules is an example, is merely logical function division, and may be other division in an actual implementation. An example in which each function module is obtained through division based on each corresponding function is used below for description.

FIG. 12 is a schematic block diagram of a communications device according to an embodiment of this application. As shown in FIG. 12, the communications device 1000 may include a processing unit 1100 and a transceiver unit 1200.

Optionally, the communications device 1000 may correspond to the terminal device in the foregoing method embodiments, for example, may be the terminal device, or a component (such as a circuit, a chip, or a chip system) disposed in the terminal device.

For example, the processing unit 1100 is configured to determine a first maximum data amount of communication performed by a terminal device in a first time period, where the first time period is a transmission period of data of the terminal device, and the first maximum data amount of communication performed in the first time period is less than a second maximum data amount of continuous communication performed by the terminal device in the first time period; and the transceiver unit 1200 is configured to send first information, where the first information indicates the first maximum data amount.

It should be understood that the communications device 1000 may correspond to the terminal device in the method 400, the method 500, the method 800, the method 1000, or the method 1100 according to the embodiments of this application. The communications device 1000 may include units configured to perform the method performed by the terminal device in the method 400 in FIG. 4, the method 500 in FIG. 5, the method 800 in FIG. 8, the method 1000 in FIG. 10, or the method 1100 in FIG. 11. In addition, the units in the communications device 1000 and the foregoing other operations and/or functions are respectively used to implement corresponding procedures of the method 400 in FIG. 4, the method 500 in FIG. 5, the method 800 in FIG. 8, the method 1000 in FIG. 10, or the method 1100 in FIG. 11.

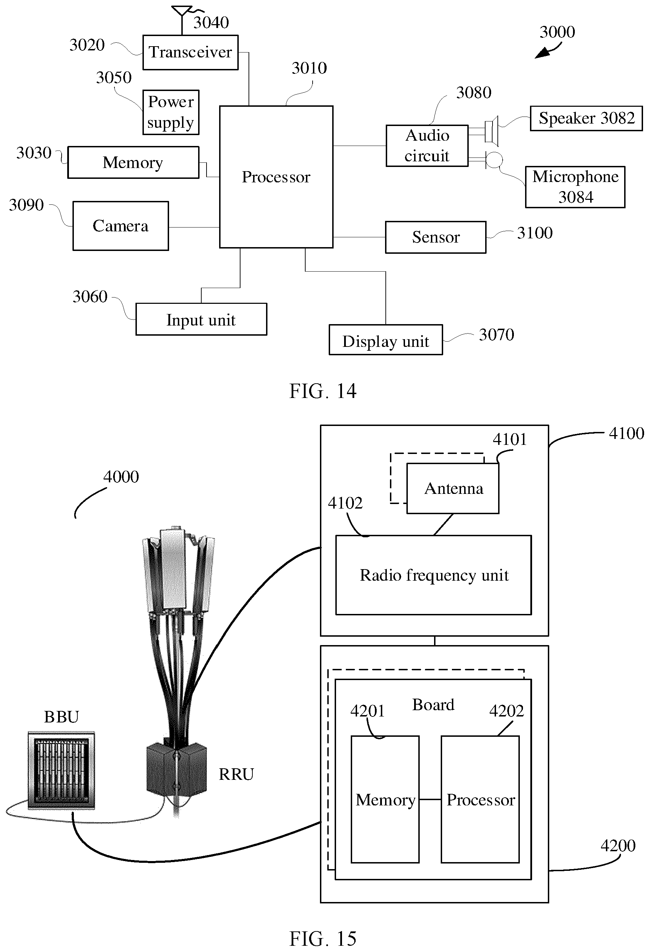

It should be further understood that when the communications device 1000 is the terminal device, the transceiver unit 1200 in the communications device 1000 may be implemented by a transceiver, for example, may correspond to a transceiver 2020 in a communications device 2000 shown in FIG. 13 or a transceiver 3020 in a terminal device 3000 shown in FIG. 14, and the processing unit 1100 in the communications device 1000 may be implemented by at least one processor, for example, may correspond to a processor 2010 in the communications device 2000 shown in FIG. 13 or a processor 3010 in the terminal device 3000 shown in FIG. 14.

It should be further understood that when the communications device 1000 is the chip or the chip system disposed in the terminal device, the transceiver unit 1200 in the communications device 1000 may be implemented by an input/output interface, a circuit, or the like, and the processing unit 1100 in the communications device 1000 may be implemented by a processor, a microprocessor, an integrated circuit, or the like integrated into the chip or the chip system.

Optionally, the communications device 1000 may correspond to the network device in the foregoing method embodiments, for example, may be the network device, or may be a component (for example, a circuit, a chip, or a chip system) disposed in the network device.

For example, the transceiver unit 1200 is configured to receive first information, where the first information indicates a first maximum data amount of communication performed by a terminal device in a first time period, the first time period is a transmission period of data of the terminal device, and the first maximum data amount in the first time period is less than a second maximum data amount of continuous communication performed in the first time period; and the processing unit 1100 is configured to perform resource scheduling on the terminal device based on the first information.

It should be understood that the communications device 1000 may correspond to the network device in the method 400, the method 500, the method 800, the method 1000, or the method 1100 according to the embodiments of this application. The communications device 1000 may include units configured to perform the method performed by the network device in the method 400 in FIG. 4, the method 500 in FIG. 5, the method 800 in FIG. 8, the method 1000 in FIG. 10, or the method 1100 in FIG. 11. In addition, the units in the communications device 1000 and the foregoing other operations and/or functions are respectively used to implement corresponding procedures of the method 400 in FIG. 4, the method 500 in FIG. 5, the method 800 in FIG. 8, the method 1000 in FIG. 10, or the method 1100 in FIG. 11.

It should be further understood that when the communications device 1000 is the network device, the transceiver unit 1200 in the communications device 1000 may be implemented by a transceiver, for example, may correspond to a transceiver 2020 in a communications device 2000 shown in FIG. 13 or a radio remote unit (radio remote unit, RRU) 4100 in a network device 4000 shown in FIG. 15, and the processing unit 1100 in the communications device 1000 may be implemented by at least one processor, for example, may correspond to a processor 2010 in the communications device 2000 shown in FIG. 13 or a processing unit 4200 or a processor 4202 in the network device 4000 shown in FIG. 15.

It should be further understood that when the communications device 1000 is the chip or the chip system disposed in the network device, the transceiver unit 1200 in the communications device 1000 may be implemented by an input/output interface, a circuit, or the like, and the processing unit 1100 in the communications device 1000 may be implemented by a processor, a microprocessor, an integrated circuit, or the like integrated into the chip or the chip system.

FIG. 13 is another schematic block diagram of a communications device 2000 according to an embodiment of this application. As shown in FIG. 13, the communications device 2000 includes a processor 2010, a transceiver 2020, and a memory 2030. The processor 2010, the transceiver 2020, and the memory 2030 communicate with each other via an internal connection path. The memory 2030 is configured to store instructions. The processor 2010 is configured to execute the instructions stored in the memory 2030, to control the transceiver 2020 to send a signal and/or receive a signal.

It should be understood that the communications device 2000 may correspond to the network device in the foregoing method embodiments, and may be configured to perform steps and/or procedures performed by the network device in the foregoing method embodiments.

As an example rather than a limitation, the processor 2010 is configured to determine a first maximum data amount of communication performed by a terminal device in a first time period, where the first time period is a transmission period of data of the terminal device, and the first maximum data amount of communication performed in the first time period is less than a second maximum data amount of continuous communication performed by the terminal device in the first time period; and

the transceiver 2020 is configured to send first information, where the first information indicates the first maximum data amount.

Optionally, the memory 2030 may include a read-only memory and a random access memory, and provide instructions and data for the processor. A part of the memory may further include a non-volatile random access memory. The memory 2030 may be a separate component, or may be integrated in the processor 2010. The processor 2010 may be configured to execute the instructions stored in the memory 2030. In addition, when the processor 2010 executes the instructions stored in the memory, the processor 2010 is configured to perform the steps and/or procedures corresponding to the network device or the terminal device in the foregoing method embodiments.

Optionally, the communications device 2000 is the network device in the embodiment provided in the method 400 in FIG. 4, the method 500 in FIG. 5, the method 800 in FIG. 8, the method 1000 in FIG. 10, or the method 1100 in FIG. 11.

The transceiver 2020 may include a transmitter and a receiver. The transceiver 2020 may further include an antenna. There may be one or more antennas. The processor 2010, the memory 2030, and the transceiver 2020 may be devices integrated in different chips. For example, the processor 2010 and the memory 2030 may be integrated in a baseband chip, while the transceiver 2020 may be integrated in a radio frequency chip. The processor 2010, the memory 2030, and the transceiver 2020 may alternatively be devices integrated in a same chip. This is not limited in this application.

Optionally, the communications device 2000 is a component disposed in the network device, for example, a circuit, a chip, or a chip system.

The transceiver 2020 may alternatively be a communications interface, for example, an input/output interface or a circuit. The transceiver 2020, the processor 2010, and the memory 2020 may all be integrated in a same chip, for example, integrated in a baseband chip.

It should be understood that the device 2000 may further correspond to the terminal device (for example, UE) in the foregoing method embodiments, and may be configured to perform steps and/or procedures performed by the terminal device in the foregoing method embodiments.

As an example rather than a limitation, the transceiver 2020 is configured to receive first information, where the first information indicates a first maximum data amount of communication performed by a terminal device in a first time period, the first time period is a transmission period of data of the terminal device, and the first maximum data amount in the first time period is less than a second maximum data amount of continuous communication performed in the first time period; and

the processor 2010 is configured to perform resource scheduling on the terminal device based on the first information.

Optionally, the memory 2030 may include a read-only memory and a random access memory, and provide instructions and data for the processor. A part of the memory may further include a non-volatile random access memory. The memory 2030 may be a separate component, or may be integrated in the processor 2010. The processor 2010 may be configured to execute the instructions stored in the memory 2030. In addition, when the processor 2010 executes the instructions stored in the memory, the processor 2010 is configured to perform the steps and/or procedures corresponding to the terminal device in the foregoing method embodiments.

Optionally, the communications device 2000 is the terminal device in the method 400, 500, 800, 1000, or 1100 in the foregoing embodiments.

The transceiver 2020 may include a transmitter and a receiver. The transceiver 2020 may further include an antenna. There may be one or more antennas. The processor 2010, the memory 2030, and the transceiver 2020 may be devices integrated in different chips. For example, the processor 2010 and the memory 2030 may be integrated in a baseband chip, while the transceiver 2020 may be integrated in a radio frequency chip. The processor 2010, the memory 2030, and the transceiver 2020 may alternatively be devices integrated in a same chip. This is not limited in this application.

Optionally, the device 2000 is a component configured in a terminal device, for example, a circuit, a chip, or a chip system.

The transceiver 2020 may alternatively be a communications interface, for example, an input/output interface or a circuit. The transceiver 2020, the processor 2010, and the memory 2020 may all be integrated in a same chip, for example, integrated in a baseband chip.

FIG. 14 is a schematic diagram of a structure of a terminal device 3000 according to an embodiment of this application. The terminal device 3000 may be used in the system shown in FIG. 1, and performs a function of the terminal device in the foregoing method embodiments. As shown in FIG. 14, the terminal device 3000 includes a processor 3010 and a transceiver 3020. Optionally, the terminal device 3000 further includes a memory 3030. The processor 3010, the transceiver 3020, and the memory 3030 may communicate with each other via an internal connection path, to transfer a control signal and/or a data signal. The memory 3030 is configured to store a computer program. The processor 3010 is configured to invoke the computer program from the memory 3030 and run the computer program, to control the transceiver 3020 to receive/send a signal. Optionally, the terminal device 3000 may further include an antenna 3040, configured to send, by using a radio signal, uplink data or uplink control signaling that is output by the transceiver 3020.

The processor 3010 and the memory 3030 may be combined into one processing apparatus, and the processor 3010 is configured to execute program code stored in the memory 3030 to implement the foregoing functions. During specific implementation, the memory 3030 may be integrated in the processor 3010, or may be independent of the processor 3010. The processor 3010 may correspond to the processing unit 1100 in FIG. 12 or the processor 2010 in FIG. 13. The transceiver 3020 may correspond to the transceiver unit 1200 in FIG. 12 or the transceiver 2020 in FIG. 13. The transceiver 3020 may include a receiver (which is also referred to as a receiver machine or a receiver circuit) and a transmitter (which is also referred to as a transmitter machine or a transmitter circuit). The receiver is configured to receive a signal, and the transmitter is configured to transmit a signal.

As an example rather than a limitation, the processor 3010 is configured to determine a maximum communications data amount of a terminal device in a first time period, where the first time period is a transmission period of a periodic service, and the maximum communications data amount in the first time period is less than a maximum communications data amount of continuous communication in the first time period; and

the transceiver 3020 is configured to send the maximum communications data amount of the terminal device in the first time period.

It should be understood that the terminal device 3000 shown in FIG. 14 can implement the processes related to the terminal device in the method embodiment shown in FIG. 4, FIG. 5,

FIG. 8, FIG. 10, or FIG. 11. Operations and/or functions of the modules in the terminal device 3000 are separately intended to implement corresponding procedures in the foregoing method embodiments. For details, refer to the descriptions in the foregoing method embodiments. To avoid repetition, a detailed description is appropriately omitted herein.

The processor 3010 may be configured to perform an action that is implemented inside the terminal device and that is described in the foregoing method embodiments. The transceiver 3020 may be configured to perform an action that is of the terminal device sending information to or receiving information from the network device and that is described in the foregoing method embodiments. For details, refer to the descriptions in the foregoing method embodiments. Details are not described herein again.

Optionally, the terminal device 3000 may further include a power supply 3050, configured to supply power to various devices or circuits in the terminal device.

Besides, to make functions of the terminal device to be more complete, the terminal device 3000 may further include one or more of an input unit 3060, a display unit 3070, an audio circuit 3080, a camera 3090, a sensor 3100, and the like. The audio circuit may further include a loudspeaker 3082, a microphone 3084, and the like.

FIG. 15 is a schematic diagram of a structure of a network device according to an embodiment of this application. For example, FIG. 15 may be a schematic diagram of a structure of a network device. The network device 4000 may be applied to the system shown in FIG. 1, to perform a function of the network device in the foregoing method embodiments. As shown in FIG. 15, the network device 4000 may include one or more radio frequency units such as a remote radio unit (remote radio unit, RRU) 4100 and one or more baseband units (BBU) (which may also be referred to as a distributed unit (DU)) 4200. The RRU 4100 may be referred to as a transceiver unit, and may correspond to the transceiver unit 1200 in FIG. 12 or the transceiver 2020 in FIG. 13.

Optionally, the RRU 4100 may also be referred to as a transceiver machine, a transceiver circuit, a transceiver, or the like, and may include at least one antenna 4101 and a radio frequency unit 4102. Optionally, the RRU 4100 may include a receiving unit and a sending unit. The receiving unit may correspond to a receiver (which is also referred to as a receiver machine or a receiver circuit). The sending unit may correspond to a transmitter (which is also referred to as a transmitter machine or a transmitter circuit). The RRU 4100 is mainly configured to: receive and send a radio frequency signal, and perform conversion between the radio frequency signal and a baseband signal, for example, configured to send indication information to a terminal device. The BBU 4200 is mainly configured to: perform baseband processing, control a network device, and the like. The RRU 4100 and the BBU 4200 may be physically disposed together, or may be physically disposed separately, that is, the network device 4000 is a distributed network device.

The BBU 4200 is a control center of the network device, may also be referred to as a processing unit, may correspond to the processing unit 1100 in FIG. 12 or the processor 2010 in FIG. 13, and is mainly configured to perform baseband processing functions such as channel encoding, multiplexing, modulation, and spectrum spreading. For example, the BBU (the processing unit) may be configured to control a network device to perform an operation procedure related to the network device in the foregoing method embodiments, for example, generating the foregoing indication information.

In an example, the BBU 4200 may include one or more boards, and a plurality of boards may jointly support a radio access network (for example, an LTE network) of a single access standard, or may separately support radio access networks (for example, an LTE network, a 5G network, or another network) of different access standards. The BBU 4200 further includes a memory 4201 and a processor 4202. The memory 4201 is configured to store necessary instructions and data. The processor 4202 is configured to control the network device to perform a necessary action, for example, is configured to control the network device to perform an operation procedure related to the network device in the foregoing method embodiments. The memory 4201 and the processor 4202 may serve one or more boards. In other words, a memory and a processor may be disposed on each board. Alternatively, a plurality of boards may share a same memory and a same processor. In addition, a necessary circuit may be disposed on each board.

As an example rather than a limitation, the transceiver 4100 is configured to receive a maximum communications data amount of a terminal device in a first time period, where the first time period is a transmission period of a periodic service, and the maximum communications data amount in the first time period is less than a maximum communications data amount of continuous communication in the first time period; and

the processor 4202 is configured to perform resource scheduling on the terminal device based on the maximum communications data amount of the terminal device in the first time period.

It should be understood that the network device 4000 shown in FIG. 15 can implement the processes of the network device in the method embodiment shown in FIG. 4, FIG. 5, FIG. 8, FIG. 10, or FIG. 11. Operations and/or functions of each module in the network device 4000 are respectively used to implement corresponding procedures in the foregoing method embodiment. For details, refer to the descriptions in the foregoing method embodiments. To avoid repetition, a detailed description is appropriately omitted herein.

The BBU 4200 may be configured to perform an action that is implemented inside the network device and that is described in the foregoing method embodiments. The RRU 4100 may be configured to perform an action of sending to or receiving from the terminal device by the network device that is described in the foregoing method embodiments. For details, refer to the descriptions in the foregoing method embodiments. Details are not described herein again.

It should be understood that the network device 4000 shown in FIG. 15 is merely a possible architecture of the network device, and should not constitute any limitation on this application. The method provided in this application is applicable to a network device in another form. For example, the network device includes an AAU, and may further include a CU and/or a DU; includes a BBU and an adaptive radio unit (adaptive radio unit, ARU); or includes a BBU. Alternatively, the network device may be customer premises equipment (customer premises equipment, CPE), or may be in another form. A specific form of the network device is not limited in this application.

The CU and/or the DU may be configured to perform an action that is implemented inside the network device and that is described in the foregoing method embodiments, and the AAU may be configured to perform an action of sending to the terminal device or receiving from the terminal device by the network device that is described in the foregoing method embodiments. For details, refer to the descriptions in the foregoing method embodiments. Details are not described herein again.

This application further provides a processing apparatus, including at least one processor. The at least one processor is configured to execute a computer program stored in a memory, to enable the processing apparatus to perform the method performed by the terminal device or the network device in any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

An embodiment of this application further provides a processing apparatus, including a processor and a communications interface. The communications interface is coupled to the processor. The communications interface is configured to input and/or output information. The information includes at least one of instructions and data. The processor is configured to execute a computer program, to enable the processing apparatus to perform the method performed by the terminal device or the network device in any one of the foregoing method embodiments.

An embodiment of this application further provides a processing apparatus, including a processor and a memory. The memory is configured to store a computer program, and the processor is configured to invoke the computer program from the memory and run the computer program, to enable the processing apparatus to perform the method performed by the terminal device or the network device in any one of the foregoing method embodiments.

According to the method provided in embodiments of this application, this application further provides a computer program product. The computer program product includes computer program code. When the computer program code is run on a computer, the computer is enabled to perform the method performed by the terminal device or the method performed by the network device in the embodiment shown in FIG. 4 or FIG. 5 or FIG. 8 or FIG. 10 or FIG. 11.

According to the method provided in embodiments of this application, this application further provides a computer-readable storage medium. The computer-readable storage medium stores program code. When the program code is run on a computer, the computer is enabled to perform the method performed by the terminal device or the method performed by the network device in the embodiment shown in FIG. 4 or FIG. 5 or FIG. 8 or FIG. 10 or FIG. 11.

According to the methods provided in embodiments of this application, this application further provides a system. The system includes one or more terminal devices and one or more network devices.

The network device and the terminal device in the foregoing apparatus embodiments completely correspond to the network device and the terminal device in the method embodiments. A corresponding module or unit performs a corresponding step. For example, a communications unit (a transceiver) performs a receiving or sending step in the method embodiments, and a step other than the sending step and the receiving step may be performed by a processing unit (a processor). For a function of a specific unit, refer to a corresponding method embodiment. There may be one or more processors.

In the foregoing embodiments, the terminal device may be used as an example of a receiving device, and the network device may be used as an example of a sending device. However, this shall not constitute any limitation on this application.

It should be noted that, the processor in this embodiment of this application may be an integrated circuit chip, and has a signal processing capability. In an implementation process, the steps in the foregoing method embodiments can be implemented by a hardware integrated logical circuit in the processor, or by using instructions in a form of software. The methods disclosed with reference to the embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be understood that, the processor in the embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. It may implement or perform the methods, the steps, and logical block diagrams that are disclosed in the embodiments of this application. The general-purpose processor may be a microprocessor, or the processor may be any conventional processor or the like.

It may be understood that the memory in the embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these memories and any memory of another proper type.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed by various computer-readable media that store various data structures. For example, the components may communicate by using a local and/or remote process and based on a signal having one or more data packets (for example, data from two components interacting with another component in a local system, a distributed system, and/or across a network such as the Internet interacting with another system by using the signal).

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The storage medium includes any medium that can store program code, such as a USB flash drive, a removable hard disk, a read-only memory (ROM), a random access memory (RAM), a magnetic disk, or an optical disc.

In embodiments of this application, the terminal device or the network device includes a hardware layer, an operating system layer running at the hardware layer, and an application layer running at the operating system layer. The hardware layer includes hardware such as a central processing unit CPU, a memory management unit (memory management unit, MMU), or a memory (also referred to as a main memory). The operating system may be any one or more types of computer operating systems, for example, a Linux operating system, a Unix operating system, an Android operating system, an iOS operating system, or a Windows operating system, that implement service processing through a process (process). The application layer includes applications such as a browser, an address book, word processing software, and instant messaging software. In addition, a specific structure of an execution body of a method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by the terminal device or the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer readable medium may include, but is not limited to, a magnetic storage device (for example, a hard disk, a floppy disk, or a magnetic tape), an optical disc (for example, a compact disc (compact disc, CD), or a digital versatile disc (DVD)), a smart card, and a flash memory device (for example, an erasable programmable read-only memory EPROM, a card, a stick, or a key driver). In addition, various storage media described in this specification may indicate one or more devices and/or other machine-readable media that are configured to store information. The term "machine readable media" may include but is not limited to a radio channel, and various other media that can store, contain and/or carry instructions and/or data.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, comprising:

    determining a first maximum data amount of communication performed by a terminal device in a first time period, wherein the first time period is a transmission period of data of the terminal device, and the first maximum data amount of communication performed in the first time period is less than a second maximum data amount of continuous communication performed by the terminal device in the first time period; and
    sending first information, wherein the first information indicates the first maximum data amount.

2. The method according to claim 1, wherein the first maximum data amount comprises an uplink and downlink layer 2 buffer size.

3. The method according to claim 1 or 2, wherein the first information comprises one or more of the following pieces of information: image definition, a source encoding method, a source compression ratio, and a first index, and the first index corresponds to the first maximum data amount.

4. The method according to claim 1 or 2, wherein the first information comprises one or more of the following pieces of information: the first time period, an air interface transmission delay of a data packet, a duty cycle of data packet transmission, a core network delay of a data packet, and a local rendering delay, wherein the air interface transmission delay of a data packet is less than the first time period.

5. The method according to claim 4, wherein the method further comprises:
    sending second information, wherein the second information is used to determine a maximum uplink and downlink transmission rate of the terminal device, and the second information comprises one or more of the following pieces of information: bandwidth, a subcarrier spacing or slot duration, a maximum modulation order, a maximum transmission code rate, a maximum quantity of transmission layers, and a scale factor of each carrier in a carrier combination.

6. The method according to claim 5, wherein the determining a first maximum data amount of communication performed by a terminal device in a first time period comprises:
determining the first maximum data amount based on the air interface transmission delay of a data packet and the maximum uplink and downlink transmission rate of the terminal device.

7. The method according to any one of claims 1 to 6, wherein the determining a first maximum data amount of communication performed by a terminal device in a first time period further comprises:
determining the first maximum data amount based on a data packet size.

8. The method according to any one of claims 1 to 7, wherein the first time period comprises N time units, and the method further comprises:

receiving scheduling information, wherein the scheduling information is used to schedule a physical uplink shared channel PUSCH and/or a physical downlink shared channel PDSCH of the terminal device, and comprises a total quantity $TotalData_{UL}$ of bits that a network device schedules the terminal device to send on the PUSCH, and/or a total quantity $TotalData_{DL}$ of bits that a network device schedules the terminal device to send on the PDSCH from a time unit (N - K) to a current scheduling time unit K; and
when $TotalData_{UL} + TotalData_{DL} < F_{total}$, sending the PUSCH, and/or receiving the PDSCH, wherein $F_{total}$ is the second maximum data amount, and N, K, and N - K are positive integers greater than or equal to 0.

9. A data transmission method, comprising:

receiving first information, wherein the first information indicates a first maximum data amount of communication performed by a terminal device in a first time period, the first time period is a transmission period of data of the terminal device, and the first maximum data amount in the first time period is less than a second maximum data amount of continuous communication performed in the first time period; and
performing resource scheduling on the terminal device based on the first information.

10. The method according to claim 9, wherein the first maximum data amount in the first time period comprises: an uplink and downlink layer 2 buffer size.

11. The method according to claim 9 or 10, wherein the first information comprises one or more of the following pieces of information: image definition, a source encoding method, a source compression ratio, and a first index, and the first index corresponds to the first maximum data amount.

12. The method according to claim 9 or 10, wherein the first information comprises one or more of the following pieces of information: the first time period, an air interface transmission delay of a data packet, a duty cycle of data packet transmission, a core network delay of a data packet, and a local rendering delay, wherein the air interface transmission delay of a data packet is less than the first time period.

13. The method according to any one of claim 12, wherein the method further comprises:

receiving second information, wherein the second information is used to determine a maximum uplink and downlink transmission rate of the terminal device, and the second information comprises one or more of the following pieces of information: bandwidth, a subcarrier spacing or slot duration, a maximum modulation order, a maximum transmission code rate, a maximum quantity of transmission layers, and a scale factor of each carrier in a carrier combination;
determining the maximum uplink and downlink transmission rate of the terminal device based on the second information; and
determining the first maximum data amount based on the maximum uplink and downlink transmission rate of the terminal device and the first information.

14. The method according to any one of claims 9 to 13, wherein the first time period comprises N time units, and the method further comprises:

sending scheduling information, wherein the scheduling information is used to schedule a physical uplink shared channel PUSCH and/or a physical downlink shared channel PDSCH of the terminal device, and comprises a total quantity $TotalData_{UL}$ of bits that a network device schedules the terminal device to transmit on the PUSCH, and/or a total quantity $TotalData_{DL}$ of bits that a network device schedules the terminal device to transmit on the PDSCH from a time unit (N - K) to a current scheduling time unit K, wherein $TotalData_{UL} + TotalData_{DL} < F_{total}$, $F_{total}$ is the second maximum data amount, and N, K, and N - K are positive integers greater than or equal to 0.

15. A data transmission apparatus, comprising:

a processing unit, configured to determine a first maximum data amount of communication performed by a terminal device in a first time period, wherein the first time period is a transmission period of data of the terminal device, and the first maximum data amount of communication performed in the first time period is less than a second maximum data amount of continuous communication performed by the terminal device in the first time period; and
a transceiver unit, configured to send first information, wherein the first information indicates the first maximum data amount.

16. The apparatus according to claim 15, wherein the first maximum data amount comprises an uplink and downlink layer 2 buffer size.

17. The apparatus according to claim 15 or 16, wherein the first information comprises one or more of the following pieces of information: image definition, a source encoding method, a source compression ratio, and a first index, and the first index corresponds to the first maximum data amount.

18. The apparatus according to claim 15 or 16, wherein the first information comprises one or more of the following pieces of information: the first time period, an air interface transmission delay of a data packet, a duty cycle of data packet transmission, a core network delay of a data packet, and a local rendering delay, wherein the air interface transmission delay of a data packet is less than the first time period.

19. The apparatus according to claim 18, wherein
the transceiver unit is further configured to send second information, wherein the second information is used to determine a maximum uplink and downlink transmission rate of the terminal device, and the second information comprises one or more of the following pieces of information: bandwidth, a subcarrier spacing or slot duration, a maximum modulation order, a maximum transmission code rate, a maximum quantity of transmission layers, and a scale factor of each carrier in a carrier combination.

20. The apparatus according to claim 19, wherein
the processing unit is further configured to determine the first maximum data amount based on the air interface transmission delay of a data packet and the maximum uplink and downlink transmission rate of the terminal device.

21. The apparatus according to any one of claims 15 and 20, wherein
the processing unit is further configured to determine the first maximum data amount based on a data packet size.

22. The apparatus according to any one of claims 15 to 21, wherein the first time period comprises N time units, and the transceiver unit is further configured to:

receive scheduling information, wherein the scheduling information is used to schedule a physical uplink shared channel PUSCH and/or a physical downlink shared channel PDSCH of the terminal device, and comprises a total quantity $TotalData_{UL}$ of bits that a network device schedules the terminal device to send on the PUSCH, and/or a total quantity $TotalData_{DL}$ of bits that a network device schedules the terminal device to send on the PDSCH from a time unit (N - K) to a current scheduling time unit K; and
when $TotalData_{UL} + TotalData_{DL} < F_{total}$, send the PUSCH, and/or receive the PDSCH, wherein $F_{total}$ is the second maximum data amount, and N, K, and N - K are positive integers greater than or equal to 0.

23. A data transmission apparatus, comprising:

a transceiver unit, configured to receive first information, wherein the first information indicates a first maximum data amount of communication performed by a terminal device in a first time period, the first time period is a transmission period of data of the terminal device, and the first maximum data amount in the first time period is less than a second maximum data amount of continuous communication performed in the first time period; and a processing unit, configured to perform resource scheduling on the terminal device based on the first information.

24. The apparatus according to claim 23, wherein the first maximum data amount in the first time period comprises: an uplink and downlink layer 2 buffer size.

25. The apparatus according to claim 23 or 24, wherein the first information comprises one or more of the following pieces of information: image definition, a source encoding method, a source compression ratio, and a first index, and the first index corresponds to the first maximum data amount.

26. The apparatus according to claim 23 or 24, wherein the first information further comprises one or more of the following pieces of information: the first time period, an air interface transmission delay of a data packet, a duty cycle of data packet transmission, a core network delay of a data packet, and a local rendering delay, wherein the air interface transmission delay of a data packet is less than the first time period.

27. The apparatus according to any one of claim 26, wherein

the transceiver unit is further configured to receive second information, wherein the second information is used to determine a maximum uplink and downlink transmission rate of the terminal device, and the second information comprises one or more of the following pieces of information: bandwidth, a subcarrier spacing or slot duration, a maximum modulation order, a maximum transmission code rate, a maximum quantity of transmission layers, and a scale factor of each carrier in a carrier combination;
the processing unit is further configured to determine the maximum uplink and downlink transmission rate of the terminal device based on the second information; and
the processing unit is further configured to determine the first maximum data amount based on the maximum uplink and downlink transmission rate of the terminal device and the first information.

28. The apparatus according to any one of claims 23 to 27, wherein the first time period comprises N time units, and the transceiver unit is further configured to:

send scheduling information, wherein the scheduling information is used to schedule a physical uplink shared channel PUSCH and/or a physical downlink shared channel PDSCH of the terminal device, and comprises a total quantity $TotalData_{UL}$ of bits that a network device schedules the terminal device to transmit on the PUSCH, and/or a total quantity $TotalData_{DL}$ of bits that a network device schedules the terminal device to transmit on the PDSCH from a time unit (N - K) to a current scheduling time unit K, wherein $TotalData_{UL} + TotalData_{DL} < F_{total}$, $F_{total}$ is the second maximum data amount, and N, K, and N - K are positive integers greater than or equal to 0.

29. A communications apparatus, comprising a processor and an interface circuit, wherein the interface circuit is configured to receive a signal from another communications apparatus different from the communications apparatus and transmit the signal to the processor, or send a signal from the processor to the another communications apparatus different from the communications apparatus, and the processor is configured to implement the method according to any one of claims 1 to 8 by using a logic circuit or executing code instructions.

30. A communications apparatus, comprising a processor and an interface circuit, wherein the interface circuit is configured to receive a signal from another communications apparatus different from the communications apparatus and transmit the signal to the processor, or send a signal from the processor to the another communications apparatus different from the communications apparatus, and the processor is configured to implement the method according to any one of claims 9 to 14 by using a logic circuit or executing code instructions.

31. A communications system, comprising:

the terminal device according to any one of claims 1 to 8; and/or
the network device according to any one of claims 9 to 14.

32. A chip, comprising: a processor, configured to invoke a computer program from a memory and run the computer program, so that a terminal device in which the chip is installed performs the method according to any one of claims 1 to 8, and/or a terminal device in which the chip is installed performs the method according to any one of claims 9 to 14.

33. A computer program, wherein when the computer program is executed by a communications apparatus, the method according to any one of claims 1 to 14 is implemented.

34. A computer-readable storage medium, wherein

the computer-readable storage medium stores a computer program, and when the computer program is run, a computer is enabled to perform the method according to any one of claims 1 to 8; or a computer is enabled to perform the method according to any one of claims 9 to 14.

35. A communications system, comprising the communications apparatus according to any one of claims 15 to 22 or claim 29, and the communications apparatus according to any one of claims 23 to 28 or claim 30.

100

Network controller 110

Network device 120          Network device 130

Terminal device 140

Terminal device 150

FIG. 1

eMBB terminal:

Baseband
capability

Hardware
capability

NR frequency
band

t

Baseband
capability

Hardware
capability

LTE

NR

...

Coexistence
frequency band of
LTE and NR

t

VR/AR terminal:

Baseband
capability

Hardware
capability

...

t

Air interface
delay

Packet arrival
period

FIG. 2

eMBB service:

Application
layer
package

...

Packet arrival
delay > 50 ms

VR/AR service:

Periodic
application
layer package

...

Air
interface
delay 10 ms

Packet arrival
period 16 ms

FIG. 3

400

```
┌─────────────────┐                              ┌─────────────────┐
│ Terminal device │                              │ Network device  │
└─────────────────┘                              └─────────────────┘
         │                                                 │
┌─────────────────────────────┐                           │
│ S410: Determine a first     │                           │
│ maximum data amount of      │                           │
│ communication performed by  │                           │
│ a terminal device in a      │                           │
│ first time period           │                           │
└─────────────────────────────┘                           │
         │                                                 │
         │  S420: Send first information, where the        │
         │  first information indicates the first          │
         │  maximum data amount                            │
         │────────────────────────────────────────────────▶
         │                                                 │
         │   ┌─────────────────────────────────────────┐  │
         │   │ S430: Perform resource scheduling on the │  │
         │   │ terminal device based on the first       │  │
         │   │ information                              │  │
         │   └─────────────────────────────────────────┘  │
         │                                                 │
```

FIG. 4

500

```
┌─────────────────┐                              ┌─────────────────┐
│ Terminal device │                              │ Network device  │
└─────────────────┘                              └─────────────────┘
         │                                                 │
         │  S510: Packet air interface transmission delay  │
         │         RLC RTT                                 │
         │────────────────────────────────────────────────▶
         │                                                 │
         │  S520: Application layer package size           │
         │────────────────────────────────────────────────▶
         │                                                 │
┌ ─ ─ ─ ─│─ ─ ─ ─ ─ ─ ─ ─ ─ ─ ─ ─ ─ ─ ─ ─ ─ ─ ─ ─ ─ ─ ─│─ ─ ┐
│        │  S530: First information (image                 │    │
│        │  definition, a source encoding method, a        │    │
│        │  source compression ratio, and the like)        │    │
│        │────────────────────────────────────────────────▶    │
│        │                                                 │    │
│        │   ┌──────────────────────────────────────────┐ │    │
│        │   │ S540: Determine the application layer     │ │    │
│        │   │ package size based on the first           │ │    │
│        │   │ information                               │ │    │
│        │   └──────────────────────────────────────────┘ │    │
└ ─ ─ ─ ─│─ ─ ─ ─ ─ ─ ─ ─ ─ ─ ─ ─ ─ ─ ─ ─ ─ ─ ─ ─ ─ ─ ─│─ ─ ┘
         │   ┌──────────────────────────────────────────┐ │
         │   │ S550: Perform resource scheduling on the  │ │
         │   │ terminal device based on the packet air   │ │
         │   │ interface transmission delay and the      │ │
         │   │ application layer package size            │ │
         │   └──────────────────────────────────────────┘ │
         │                                                 │
```

FIG. 5

```
┌─────────────────────────────┐
│          NR and LTE          │
│    Frequency band 1 and      │
│      frequency band 2        │
│    Uplink transmission and   │
│     downlink transmission    │
└─────────────────────────────┘
```

Baseband computing
capability/storage capability

FIG. 6

```
┌───────────────────────────────────────────────────────────────┐
│  ┌──────────────────────┐   ┌──────────────────────────┐       │
│  │ Uplink transmission (NR,│  │   Downlink transmission  │      │
│  │ LTE, frequency band 1,  │  │ (NR, LTE, frequency band │      │
│  │ and frequency band 2)   │  │ 1, and frequency band 2) │      │
│  └──────────────────────┘   └──────────────────────────┘       │
└───────────────────────────────────────────────────────────────┘
```

Baseband computing
capability/storage capability

FIG. 7

800

| Terminal device | | Network device |

S810: Report a service feature of the terminal device

S820: Report a hardware capability of the
terminal device

S830: Determine a layer 2 buffer size based on
the service feature of the terminal device and the
hardware capability of the terminal device

S840: Perform resource scheduling on the
terminal based on the layer 2 buffer size

FIG. 8

Service feature A:

Maximum uplink and downlink transmission rate

Air interface delay

t

Service feature B:

Maximum uplink and downlink transmission rate

Data packet arrival period

t

Duty cycle = air interface delay/data packet arrival period

Service feature C:

Maximum uplink and downlink transmission rate

Data packet arrival period

t

1 − duty cycle = 1 − (air interface delay/data packet arrival period)

FIG. 9

1000

```
┌─────────────────┐                              ┌─────────────────┐
│ Terminal device │                              │ Network device  │
└─────────────────┘                              └─────────────────┘
         │                                                 │
         │  S1010: Report a service feature of the         │
         │  terminal device, or a hardware capability      │
         │  of the terminal device and the service         │
         │  feature of the terminal device                 │
         │ ───────────────────────────────────────────►   │
         │                                                 │
```

S1020: Determine a layer 2 buffer size based on the service feature of the terminal device, or based on the hardware capability of the terminal device and the service feature of the terminal device

S1030: Perform resource scheduling on the terminal device based on the layer 2 buffer size

FIG. 10

1100

```
┌─────────────────┐                              ┌─────────────────┐
│ Terminal device │                              │ Network device  │
└─────────────────┘                              └─────────────────┘
         │                                                 │
```

S1110: Report a maximum transmission rate of simultaneously processing data in a frequency band combination, a carrier combination, or a cell group

S1120: Report a constraint condition of a maximum quantity of transmission layers for simultaneous transmission on a downlink bandwidth part BWP in the frequency band combination, the carrier combination, or the cell group (a sum of maximum quantities of transmission layers does not exceed LDL MAX)

S1130: Perform resource scheduling on the terminal based on the maximum transmission rate and the constraint condition of the maximum quantity of transmission layers

FIG. 11

Communications apparatus 1000

Processing unit 1100

Transceiver unit 1200

FIG. 12

Communications apparatus 2000

Processor
2010

Memory
2030

Transceiver
2020

FIG. 13

FIG. 14

FIG. 15

## INTERNATIONAL SEARCH REPORT

| International application No. |
| --- |
| **PCT/CN2022/096629** |

| A. CLASSIFICATION OF SUBJECT MATTER |
| --- |
| H04W 72/04(2009.01)i; H04W 92/10(2009.01)i |
| According to International Patent Classification (IPC) or to both national classification and IPC |

| B. FIELDS SEARCHED |
| --- |
| Minimum documentation searched (classification system followed by classification symbols) |
| H04W 72/-; H04W 92/- |

Documentation searched other than minimum documentation to the extent that such documents are included in the fields searched

| Electronic data base consulted during the international search (name of data base and, where practicable, search terms used) |
| --- |
| CNABS, CNTXT, CNKI, 万方, WANFANG: PUSCH, PDSCH, RLC RTT, radio link control round-trip time, layer 2 buffer size , L2 buffer size, 层2缓存, 空口时延, 周期, 最大, 峰, 速率, 包, 帧, 时间, 时长, 间隙, 时间窗 VEN, WOTXT, EPTXT, USTXT, 3GPP, IEEE: radio link control round-trip time, virtual reality, PDSCH, max data rate, embb, total layer 2 buffer size, augmented reality, duty cycle, cloud gaming, AR, RLC RTT, PUSCH, VR |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | EP 3554110 A1 (GUANGDONG OPPO MOBILE TELECOMMUNICATIONS CORP., LTD.) 16 October 2019 (2019-10-16) description, paragraphs 91-98 | 1-35 |
| X | US 2013010705 A1 (TELEFONAKTIEBOLAGET LM ERICSSON (PUBL) et al.) 10 January 2013 (2013-01-10) description, paragraphs 24-44 | 1-35 |
| A | CN 107889098 A (ZTE CORP.) 06 April 2018 (2018-04-06) entire document | 1-35 |
| A | 3GPP. "User Equipment (UE) radio access capabilities" *3GPP TS 38.306 V16.4.0*, 30 March 2021 (2021-03-30), entire document | 1-35 |
| A | ZTE. "Discussion on potential UE complexity reduction features" *3GPP TSG RAN WG1 Meeting #101 R1-2003801*, 16 May 2020 (2020-05-16), entire document | 1-35 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 July 2022** | **29 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/096629**

| Patent document cited in search report | | | Publication date (day/month/year) | Patent family member(s) | | | Publication date (day/month/year) |
|---|---|---|---|---|---|---|---|
| EP | 3554110 | A1 | 16 October 2019 | EP | 3923610 | A1 | 15 December 2021 |
| | | | | BR | 112019013426 | A2 | 31 December 2019 |
| | | | | RU | 2019123438 | A | 29 January 2021 |
| | | | | US | 2020128526 | A1 | 23 April 2020 |
| | | | | PH | 12019501532 | A1 | 02 March 2020 |
| | | | | MX | 2019007827 | A | 16 August 2019 |
| | | | | JP | 2020503791 | A | 30 January 2020 |
| | | | | WO | 2018119743 | A1 | 05 July 2018 |
| | | | | CN | 110115053 | A | 09 August 2019 |
| | | | | TW | 201824905 | A | 01 July 2018 |
| | | | | JP | 2021182772 | A | 25 November 2021 |
| | | | | CA | 3048652 | A1 | 05 July 2018 |
| | | | | ZA | 201904822 | B | 23 December 2020 |
| | | | | KR | 20190100239 | A | 28 August 2019 |
| | | | | AU | 2016434076 | A1 | 25 July 2019 |
| | | | | US | 2021274490 | A1 | 02 September 2021 |
| | | | | SG | 11201906049 | A1 | 30 July 2019 |
| | | | | IN | 201917026758 | A | 30 August 2019 |
| | | | | VN | 66037 | A | 25 September 2019 |
| | | | | ID | 201907519 | A | 18 October 2019 |
| | | | | HK | 40008265 | A0 | 12 June 2020 |
| | | | | US | 11039445 | B2 | 15 June 2021 |
| | | | | RU | 2754591 | C2 | 03 September 2021 |
| | | | | JP | 6931060 | B2 | 01 September 2021 |
| | | | | EP | 3923610 | A4 | 15 December 2021 |
| | | | | CN | 110115053 | B | 15 February 2022 |
| | | | | AU | 2016434076 | B2 | 07 April 2022 |
| US | 2013010705 | A1 | 10 January 2013 | EP | 2730064 | A2 | 14 May 2014 |
| | | | | WO | 2013006112 | A2 | 10 January 2013 |
| | | | | WO | 2013006112 | A3 | 02 May 2013 |
| | | | | IN | 201400250 | P2 | 02 May 2014 |
| | | | | EP | 2730064 | A4 | 20 May 2015 |
| | | | | US | 9055464 | B2 | 09 June 2015 |
| CN | 107889098 | A | 06 April 2018 | WO | 2018059519 | A1 | 05 April 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110639352